(19) Europäisches Patentamt
European Patent Office
Office européen des brevets

(11) Veröffentlichungsnummer: **0 261 577 B1**

(12) **EUROPÄISCHE PATENTSCHRIFT**

(45) Veröffentlichungstag der Patentschrift: **16.05.90**

(51) Int. Cl.[5]: **C07C 233/01**, C08J 5/22, B01D 61/00, G01N 27/30

(21) Anmeldenummer: **87113553.9**

(22) Anmeldetag: **16.09.87**

(54) **Dicarbonsäurediamide, Verfahren zu deren Herstellung, diese enthaltende Ionenselektive Membranen und Testvorrichtungen, sowie Lithiumkomplexe der Dicarbonsäurediamide.**

(30) Priorität: **23.09.86 CH 3795/86**

(43) Veröffentlichungstag der Anmeldung: **30.03.88 Patentblatt 88/13**

(45) Bekanntmachung des Hinweises auf die Patenterteilung: **16.05.90 Patentblatt 90/20**

(84) Benannte Vertragsstaaten: **AT BE DE ES FR GB IT LU NL SE**

(56) Entgegenhaltungen:
**EP-A- 0 174 572**

**CHEMICAL ABSTRACTS, Band 98, Nr. 3, 17. Januar 1983, Seite 207, Zusammenfassung Nr. 13059z, Columbus, Ohio, US; R. MARGALIT et al.: "New lithium ion-selective ionophores with the potential ability to mediate lithium ion-transport in vivo. Ionic selectivity and relative potencies, studied in model membranes" 000**
**CHEMICAL ABSTRACTS, Band 102, Nr. 11, 18. März 1985, Seite 539, Zusammenfassung Nr. 95269f, Columbus, Ohio, US;**

(73) Patentinhaber: **Willi Möller AG, Gubelstrasse 37, CH-8050 Zürich(CH)**

(72) Erfinder: **Wilhelm, Simon, Hadlaubstrasse 63, CH-8006 Zürich(CH)**

(74) Vertreter: **Blum, Rudolf Emil Ernst, c/o E. Blum & Co Patentanwälte Vorderberg 11, CH-8044 Zürich(CH)**

EP 0 261 577 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

### HINTERGRUND DER ERFINDUNG

Die vorliegende Erfindung betrifft neue Dicarbonsäurediamide, deren Aminkomponente Dicyclohexylamin ist. Diese bilden Lithiumkomplexe, die im lipophilen Lösungsmittel löslich sind. Die Dicarbonsäurediamide weisen eine hohe Selektivität für Lithiumionen im Vergleich zu anderen Alkalimetallionen und Erdalkalimetallionen auf. Die Dicarbonsäurediamide können als ionenselektive Komponente in ionenselektiven Membranen zur Bestimmung der Konzentration von Lithiumionen und ferner in Testvorrichtungen, beispielsweise Teststreifen, zur Feststellung von Lithiumionen in flüssigen Medien eingesetzt werden.

Des weiteren betrifft die vorliegende Erfindung ein Verfahren zur Herstellung der neuen Dicarbonsäurediamide.

### BESCHREIBUNG DES STANDES DER TECHNIK

Verschiedene Dicarbonsäurediamide, die mit Kationen lipophile Komplexe bilden und die als Komponenten von ionenselektiven Membranen zur Bestimmung der Konzentration der fraglichen Kationen eingesetzt werden können, sind bereits in der Literatur beschrieben. Unter diesen bisher beschriebenen Dicarbonsäurediamiden befinden sich auch solche, die eine gewisse Selektivität für Lithiumionen im Vergleich zu anderen Alkalimetallionen besitzen.

Im Chemical Abstracts, Band 102, Nr. 11, 18. März 1985, Seite 539, Zusammenfassung Nr. 95269f, Yeda Research, werden Dicarbonsäurediamide beschrieben, die eine Lithiumselektivität besitzen. Die amidbildende Aminkomponente dieser Dicarbonsäurediamide ist ein Dialkylamin, in welchem die eine der beiden Alkylgruppen unsubstituiert ist und die andere der beiden Alkylgruppen mit Alkoxygruppen, Acylgruppen, Estergruppen oder Amidgruppen substituiert ist. Lithiumkomplexe dieser Dicarbonsäurediamide wurden durch intracerebrale Injektion an Ratten verabreicht und dadurch konnte in der Cortex dieser Tiere eine höhere Konzentration an Lithiumionen erreicht werden, verglichen mit einer entsprechenden Verabreichung von Lithiumchlorid.

Die Konzentrationen der wichtigsten Kationen, die in biologischen Flüssigkeiten anzutreffen sind, nämlich von $Na^+$, $K^+$, $Ca^{2+}$ und Wasserstoffionen können in klinischen Laboratorien leicht bestimmt werden, indem man Elektroden einsetzt, die mit einer entsprechenden ionenselektiven Membran ausgestattet sind. Im Gegensatz dazu wird die Testung auf Li thiumionen immer noch nach der Methode der Flammenphotometrie oder der Atomabsorptions-Spektrometrie durchgeführt. Die Feststellung der Konzentration von Lithiumionen im Blutserum ist dann sehr wichtig, wenn Patienten, die an manisch-depressiven Psychosen leiden, einer Therapie mit Lithiumionen unterworfen werden oder wenn an Patienten Lithiumionen prophylaktisch verabreicht werden, um das Auftreten von manischdepressiven Psychosen zu verhindern. Es sei in diesem Zusammenhang auf die Veröffentlichungen von A. Amidsen und M. Schou in Münch. Med. Wochenschr., 117(1975) 1417 und A. Amidsen, Dan. Med. Bull., 22(1975) 277 hingewiesen.

Bekanntlich liegen im Blutserum wesentlich höhere Konzentrationen an Natriumionen vor als an Lithiumionen und deshalb ist für eine ionenselektive Membran, die in einer Elektrode verwendet wird, um die Aktivität der Lithiumionen im Blutserum zu bestimmen, ein hoher Selektivitätskoeffizient für Lithiumionen, im Vergleich zu anderen Alkalimetallionen und insbesondere im Vergleich zu Natriumionen, unbedingt nötig. Eine ionenselektive Komponente einer ionenselekt/iven Membran zur Bestimmung von Lithiumionen in Körperflüssigkeiten muss daher hohen Anforderungen bezüglich ihrer $Li^+/Na^+$-Selektivität genügen. Ausserdem müssen Elektroden, die mit derartigen lithiumselektiven Membranen ausgestattet sind, eine adequate Stabilität des Elektrodenpotentials aufweisen und die Membranen müssen auch eine ausreichend lange Lebensdauer besitzen, wenn sie bei der Durchführung der Bestimmung mit Blutserum oder Gesamtblut in Berührung gebracht werden.

Es wurden bereits viele neue Diamide von Dicarbonsäuren hergestellt, um entsprechende komplexbildende Mittel zu synthetisieren, welche die gewünschte hohe Selektivität gegenüber Lithiumionen im Vergleich zu anderen Alkalimetallionen und Erdalkalimetallionen aufweisen. Derartige Verbindungen sollen als ionenselektive Komponente in entsprechenden ionenselektiven Membranen zur Bestimmung von Lithiumkonzentrationen einsetzbar sein.

In Chemical Abstracts, Band 98, Nr. 3, 17. Januar 1983, Seite 207, Zusammenfassung Nr. 13059z werden bereits lithiumselektive Komponenten beschrieben, welche Dicarbonsäurediamide sind. Das amidbildende Amin dieser Dicarbonsäurediamide ist ein substituiertes Di-heptylamin, in dem die Heptylgruppen als Substituenten aliphatische Aether, Tetrahydrofuran, Ester und Amide tragen können. Der Selektivitätskoeffizient dieser Verbindungen für Lithiumionen über Natriumionen beträgt jedoch dort bestenfalls nur 13, wodurch eine Bestimmung der Konzentration von Lithiumionen in Anwesenheit einer höheren Konzentration von Natriumionen absolut unmöglich ist.

Elektroden, welche eine ionenselektive Membran aufweisen und welche Dicarbonsäurediamide enthalten, die eine Selektivität für Lithiumionen gegenüber Natriumionen aufweisen, sind in der Veröffentlichung von A.F. Zhukov, D. Erne, D. Amman, M. Güggi, E. Pretsch und W. Simon in Analytica Chimica

Acta, 131(1981) auf den Seiten 117 - 122 beschrieben. In dieser Veröffentlichung ist unter anderem das Cyclohexan-1,2-dicarbonsäurediamid der folgenden Formel A

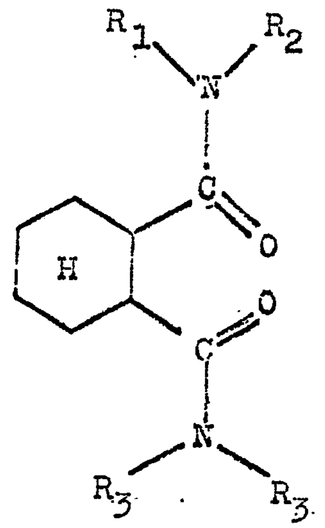

A

beschrieben, wobei in dieser Formel A die Gruppierung der Formel

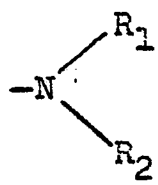

und auch die Gruppierung der Formel

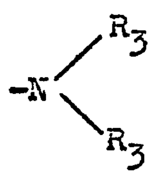

die folgende Struktur besitzt:

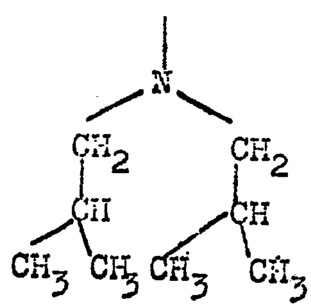

Die Synthese dieser Cyclohexan-1,2-dicarbonsäurediamide ist in der Veröffentlichung von D. Erne, D. Ammann, A.F. Zhukov, F. Behm, E. Pretsch und W. Simon, in Helv. Chim. Acta, 65 (1982), Seiten 538-545, beschrieben.

In der europäischen Patentveröffentlichung Nr. 0 174 572 sindm zwei Cyclohexan-1,2-dicarbonsäurediamide beschreiben, welche von den bischer bekannten Verbindungen den höchsten Selektivitätskoeffizienten für Lithiumionen im Vergleich zu anderen Alkalimetallionen aufwiesen. Diese Verbindungen entsprechen der obigen Struktur A, wobei der Rest der Formel

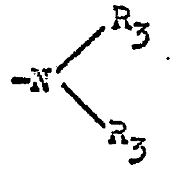

die oben angegebene Struktur besitzt, während die Gruppierung der Formel

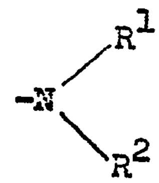

entweder die Formel

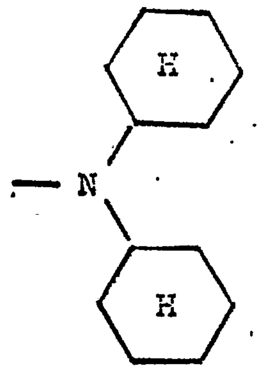

oder die Formel

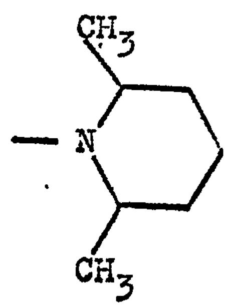

aufweist.

Ionenselektive Membranen, die als ionenselektive Komponente eine der beiden in der europäischen Patentveröffentlichung Nr. 0 174 572 beschriebenen Cyclohexan-1,2-dicarbonsäurediamide enthalten und ausserdem als Weichmacher o-Nitrophenyl-n-octyläther enthalten, weisen eine hohe Selektivität für Lithiumionen gegenüber Natriumionen auf, und zwar einen Wert für

$$\log K_{LiNA}^{Pot}$$

von -2,3. Der entsprechende Wert der strukturell sehr ähnlich aufgebauten Verbindung der Formel A beträgt hingegen nur -1,0.

Mit ionenselektiven Membranen, die eine der beiden Dicarbonsäurediamide enthalten, die in der europäischen Patentveröffentlichung Nr. 0 174 572 beschrieben sind, und ferner den ziemlich polaren Weichmacher o-Nitrophenyl-n-ocytläther enthalten, können Lithiumionen in physiologischen Flüssigkeiten wie Blutserum oder Gesamtblut bestimmt werden, aber die entsprechenden Membranen haben nur eine Lebensdauer von wenigen Wochen, wenn sie häufig mit Blutserum oder Gesamtblut in Berührung gebracht werden. Diese relativ kurze Lebensdauer dürfte hauptsächlich auf die ziemlich polaren Eigenschaften und das damit verbundene Auswandern dieses Weichmachers in die Testlösung

zurückzuführen sein, aber eine Kombination dieser beiden Cyclohexan-1,2-dicarbonsäurediamide mit weniger polaren Weichmachern führte zu Membranen, die keine ausreichend hohe Selektivität gegenüber Lithiumionen besassen, um eine Bestimmung in biologischen Flüssigkeiten zu ermöglichen.

Ziel der vorliegenden Erfindung war es, neue Dicarbonsäurediamide zu entwickeln, die eine hohe Selektivität für Lithiumionen gegenüber anderen Alkalimetallionen aufweisen und die es ermöglichen, entsprechende ionenselektive Membranen herzustellen, die eine lange Lebensdauer besitzen, wenn sie mit Testlösungen in Berührung stehen, insbesondere biologischen Flüssigkeiten wie beispielsweise Blutserum.

BESCHREIBUNG DER ERFINDUNG

Es wurde nun völlig unerwarteterweise gefunden, dass Dicarbonsäurediamide, welche sich in ihrer chemischen Struktur sehr deutlich von den vorteilhaftesten bisher bekannten lithiumselektiven Carbonsäureamiden unterscheiden, nämlich den beiden Cyclohexancarbonsäurediamiden, die in der europäischen Patentveröffentlichung Nr. 0 174 572 beschrieben sind, eine sehr hohe Selektivität für Lithiumionen gegenüber Natriumionen aufweisen und dass mit Hilfe dieser neuen Dicarbonsäurediamide lithiumselektive Membranen hergestellt werden können, die auch bei häufigem Kontakt mit Blutserum und Gesamtblut eine lange Lebensdauer besitzen.

Ein Gegenstand der vorliegenden Erfindung sind daher die Dicarbonsäurediamide, die dadurch gekennzeichnet sind, dass sie die Formel I

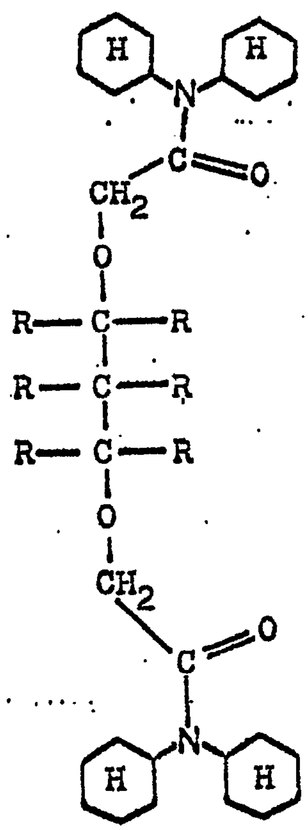

I

aufweisen, wobei in dieser Formel I die Reste R unabhängig voneinander die Bedeutung von Wasserstoffatomen, verzweigtkettigen oder geradkettigen Alkylresten mit 1 - 20 Kohlenstoffatomen, verzweigtkettigen oder geradkettigen Alkenylresten mit 2 - 20 Kohlenstoffatomen oder verzweigtkettigen oder geradkettigen Alkinylresten mit 2 - 20 Kohlenstoffatomen aufweisen.

Bevorzugte Dicarbonsäurediamide der Formel I sind solche, in welchen die Reste R unabhängig voneinander die Bedeutung von Wasserstoffatomen oder geradkettigen oder verzweigtkettigen Alkylresten mit 1 - 15 Kohlenstoffatomen aufweisen, vorzugsweise von Wasserstoffatomen oder geradkettigen oder verzweigtkettigen Alkylresten mit 1 - 8 Kohlenstoffatomen.

In den erfindungsgemässen Dicarbonsäurediamiden der Formel I besitzen vorzugsweise mindestens zwei der Reste R die Bedeutung von Wasserstoffatomen und speziell bevorzugt weisen drei bis sechs der Reste R die Bedeutung von Wasserstoffatomen auf.

Spezielle Beispiele für erfindungsgemässe Dicarbonsäurediamide der Formel I sind die Verbindungen

der nachfolgend angegebenen Formeln II bis VI

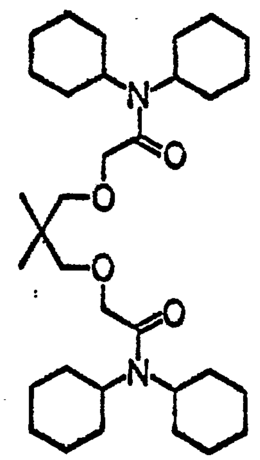

II

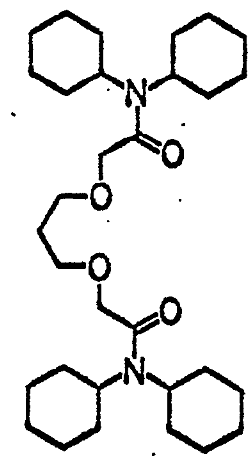

III

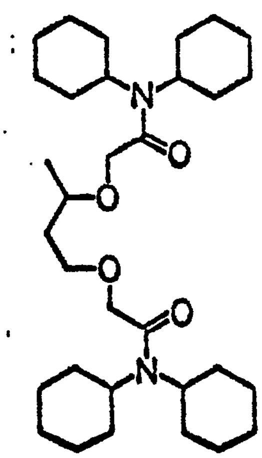

IV

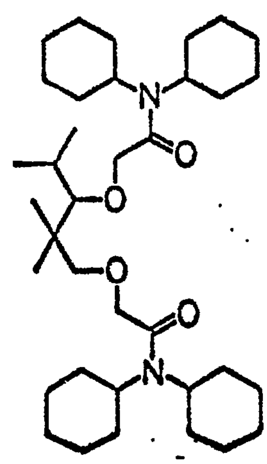

V

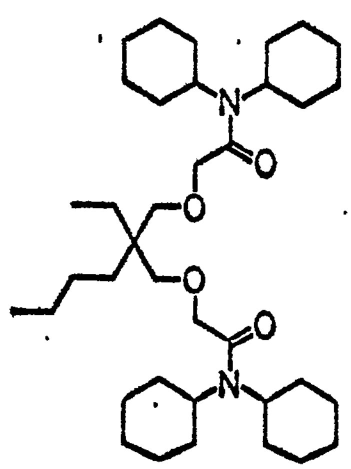

Die hohe Lithiumselektivität der erfindungsgemässen Dicarbonsäurediamide, in welchen die Aminkomponenten beider Säureamidgruppierungen Dicyclohexylamin sind, im Vergleich zu ähnlich aufgebauten Dicarbonsäurediamiden, ist überaus überraschend.

Zu Vergleichszwecken wurde ein Dicarbonsäurediamid getestet, das die gleiche Grundstruktur aufweist, wie das erfindungsgemässe Dicarbonsäure diamid der oben angegebenen Formel II, in welchem aber die amidbildende Aminkomponente nicht Dicyclohexylamin ist, sondern Methyl-heptylamin. Dieses Säureamid zu Vergleichszwecken weist also die folgende Formel B

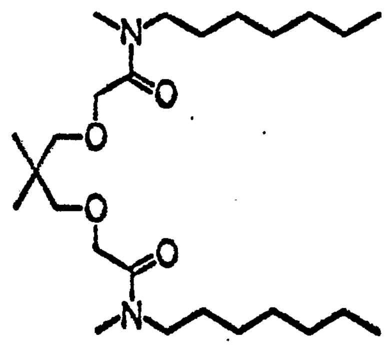

B

auf. Die Verbindung der Formel B und weitere Dicarbonsäurediamide, deren Dicarbonsäurerest identisch ist mit demjenigen der erfindungsgemässen Dicarbonsäurediamide der Formeln III, V und VI, in welchen jedoch die Amidgruppe des Dicarbonsäurediamides vom Methyl-heptylamin stammt, sind in der weiter vorne bereits genannten Veröffentlichung von Zhukov et al. Analytica Chimica Acta, 131 (1981), Seiten 117 - 122 beschrieben. Die dort beschriebenen Verbindungen weisen Selektivitätskoeffizienten für Lithiumionen über Alkalimetallionen von mehr als 100 auf und für Lithiumionen über Erdalkalimetallionen von etwa 1000 auf. Ihre Selektivitätskoeffizienten für Lithiumionen über Natriumionen sind jedoch nicht ausreichend hoch, um die Herstellung von ionenselektiven Membranen zu ermöglichen, mit deren Hilfe Lithiumkonzentrationen in biologischen Flüssigkeiten bestimmt werden können. In ansonsten analog aufgebauten Membranen wies beispielsweise die in dieser Veröffentlichung genannte Verbindung der Formel B einen Wert für

$$\log K_{LiNA}^{Pot}$$

von -1,2 auf, während der entsprechende Wert für die strukturell ähnlich aufgebaute erfindungsgemässe Verbindung der Formel II -1,7 betrug.

Ein weiterer Gegenstand der vorliegenden Erfindung ist ein Verfahren zur Herstellung der erfindungsgemässen Dicarbonsäurediamide der Formel I

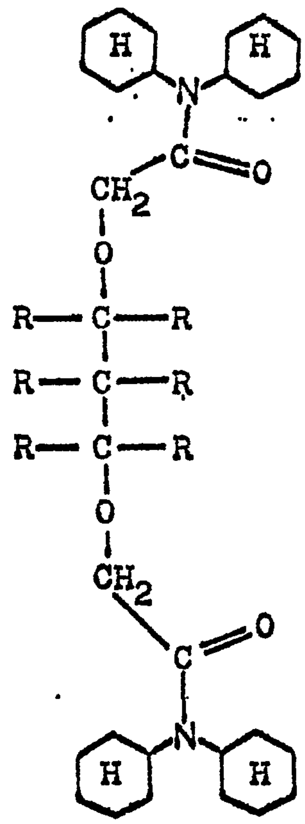

I

in welcher die Reste R die weiter vorne angegebene Bedeutung besitzen. Dieses Verfahren ist dadurch gekennzeichnet, dass man ein Diol der Formel VII

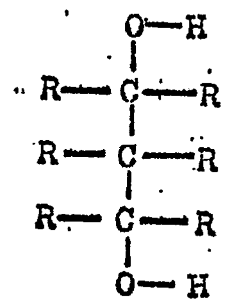

VII

entweder mit einem Säureamid der Formel VIII

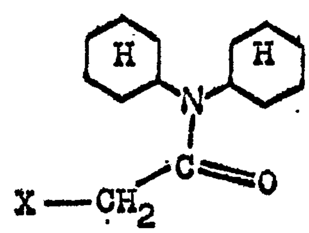

VIII

worin

X eine abspaltbare Gruppierung darstellt, zu dem Dicarbonsäurediamid der Formel I veräthert oder dass man das Diol der Formel VII mit einem Ester der Formel IX

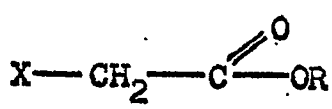

IX

in welchem
X eine abspaltbare Gruppierung darstellt und
R' ein aliphatischer, cycloaliphatischer, aromatischer oder heterocyclischer Rest ist,
veräthert, wobei sich ein Dicarbonsäurediester der Formel X

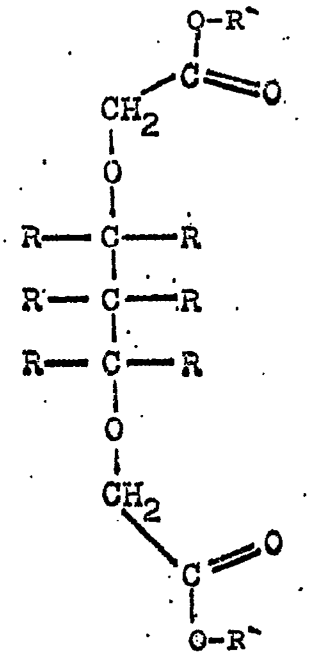

X

bildet
und diesen Ester direkt oder nach Verseifung und Überführung in ein aktives Dicarbonsäurederivat durch Umsetzung mit dem Dicyclohexylamin der Formel XI

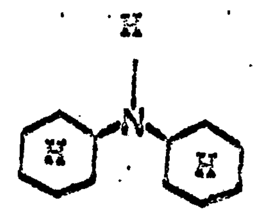

XI

in das Dicarbonsäurediamid der Formel I überführt.

In den eingesetzten Ausgangsmaterialien der Formel VIII, bzw. IX, muss durch die abspaltbare Gruppe X die $CH_2$-Gruppe des entsprechenden Essigsäureamides der Formel VIII oder Essigsäureesters der Formel IX ausreichend aktiviert werden, damit die Verätherung mit den Hydroxylgruppen des Dioles der Formel VII stattfindet. Als Beispiel für einen geeigneten Ester der Formel IX sei ein entsprechender Diazoessigsäureester genannt, beispielsweise der Diazoessigsäureäthylester.

Die Dicarbonsäurediamide der Formeln II–VI wurden nach dem oben beschriebenen Verfahren hergestellt.

Ein weiterer Gegenstand der vorliegenden Erfindung sind Lithiumkomplexe der Dicarbonsäurediamide der Formel I, die dadurch gekennzeichnet sind, dass sie 1:1 Komplexe aus einem Lithiumion und einem Molekül des Komplexbildners der Formel I sind.

Die Röntgenstrukturanalyse dieser Lithiumkomplexe zeigte, dass die Komplexe 1:1 Komplexe sind, also 1 Lithiumion wird von 1 Molekül des Komplexbildners komplexiert. Die Kristallstruktur der Komplexe aus LiNCS mit dem Komplexbildner der Formel II wurde untersucht. Dabei zeigte es sich, dass die vier Sauerstoffatome des Komplexbildners, nämlich die beiden Äthersauerstoffatome und die beiden Carbonylsauerstoffatome des Carbonsäurediamides die Grundfläche einer leicht verformten quadratischen Pyramide bilden, wobei sich das $Li^+$ Kation 0,76 Angström oberhalb der Pyramidengrundfläche befindet und an dieses Lithiumkation das Stickstoffatom des NCS-Anions gebunden ist. In diesem Komplex beträgt der mittlere Abstand zwischen dem Lithiumion und dem Carbonylsauerstoffatom 1,94 Å während der mittlere Abstand zwischen dem Lithiumkation und dem Äthersauerstoffatom 2,16 Å beträgt.

Nach der genauen Untersuchung der Kristallstruktur der erfindungsgemässen Lithiumkomplexe ist es besonders überraschend, dass die erfindungsgemässen Komplexbildner der Formel I eine wesentlich höhere Selektivität für Lithiumionen gegenüber Natriumionen aufweisen als die in der oben genannten Literatur beschriebenen Komplexbildner, die sich von den erfindungsgemässen Verbindungen der Formel I lediglich durch die Amin komponente des Säureamides unterscheiden. Nach den Ergebnissen der Untersuchungen der Kristallstruktur könnte man weit eher annehmen, dass die Aminkomponente der Carbonsäurediamide einen wesentlich geringeren Einfluss auf die Li/Na-Selektivität ausübt.

Ein weiterer Gegenstand der vorliegenden Erfindung ist eine ionenselektive Membran zur Bestimmung der Konzentration von Lithiumionen, die dadurch gekennzeichnet ist, das sie als ionenselektive Komponente eine erfindungsgemässes Carbonsäurediamid der Formel I enthält.

Bevorzugte erfindungsgemässe ionenselektive Membranen enthalten ausserdem Poly(vinylchlorid) als Matrix für die ionenselektive Komponente.

Im allgemeinen enthalten die erfindungsgemässen ionenselektiven Membranen ausserdem noch einen Weichmacher. Als Weichmacher sind lipophile Weichmacher bevorzugt, und speziell bevorzugte Weichmacher sind Ester von organischen Carbonsäuren. Mit Hilfe des relativ unpolaren Weichmachers Bis(1-butylpentyl)adipat gelang es ionenselektive Membranen unter Verwendung von Poly(vinylchlorid) als Träger und der erfindungsgemässen Dicarbonsäurediamide der Formel I herzustellen, die bei lang dauernder Verwendung zur Bestimmung von Lithiumkonzentrationen im Blutserum und im Gesamtblut Lebensdauern von vielen Monaten aufwiesen.

Ionenempfindliche Membranen, die unter Verwendung von Poly(vinylchlorid) als Matrix und Bis(1-butylpentyl)adipat als Weichmacher, sowie der erfindungsgemässen Dicarbonsäurediamide als ionenselektive Komponente hergestellt wurden, hatten im allgemeinen die folgende Zusammensetzung:

0,9–2,4 Gew.-%, bezogen auf das Gesamtgewicht der Membran an der ionenselektiven Komponente der Formel I,

64,9–67,3 Gew.-%, bezogen auf das Gesamtgewicht der Membran an dem Bis(1-butylpentyl)adipat,

31,5–33,5 Gew.-% an dem Poly(vinylchlorid).

Vorzugsweise enthalten die oben erwähnten ionenempfindlichen Membranen 1,2 Gew.-% bis 2,0 Gew.-%, bezogen auf das Gesamtgewicht der Membran an dem ionenselektiven Dicarbonsäurediamid der Formel I.

Die EMK-Untersuchungen der Membranen, welche die erfindungsgemässen Verbindungen der Formel I enthalten und der Membranen zu Vergleichszwecken, wurden mit Makroelektroden unter Verwendung der folgenden Anordnung durchgeführt:

Hg; $Hg_2Cl_2$, KCl (ges.) | 3 M KCl | 3 M KCl | Probenlösung || ionenselektive Membran || Elektrodenfüllungslösung, AgCl; Ag.

Die Referenzelektrode war eine gesättigte Kalomelelektrode mit zwei seriellen Diffusionspotentialübergängen und einem freien Flüssigkeitsübergang von 1 µl/h. Als Elektrodenfüllungslösung wurde eine 0,001 molare LiCl Lösung eingesetzt und bezüglich näherer Einzelheiten der Durchführung der Messungen und auch der mathematischen Auswertung der Ergebnisse sei auf die Veröffentlichung von E. Metzger, D. Ammann, R. Asper, W. Simon, in Anal. Chem. 1986, 58, 132, verwiesen.

Die Untersuchungen von Blutserum und von Probe-Lösungen mit festgesetztem Ionenhintergrund wurden mit Hilfe von Minielektroden unter Verwendung der folgenden Anordnung durchgeführt:

Hg; $Hg_2Cl_2$, KCl (ges.) | 3 M $NH_4NO_3$ | Probenlösung || ionenselektive Membran || Elektrodenfüllungslösung, AgCl; Ag.

Die ionenselektive Minielektrode war aus einem kleinen Elektrodenkörper aus Poly(methylmethacrylat) mit einem vertikalen Kanal eines Innendurchmessers von 0,8 mm ausgestattet. In diesen vertikalen Kanal konnte die Probelösung von oben injiziert werden. Der mit der Probe gefüllte Kanal wurde mit der ionenselektiven Membran in Berührung gebracht und die andere Seite der ionenempfindlichen Membran wurde mit der Elektrodenfüllungslösung in Berührung gebracht, wobei ein mit Silberchlorid beschichteter Silberdraht als innere Ableitung eingesetzt wurde. Als Elektrodenfüllungslösung wurde eine Lösung von 0,001 M LiCl plus 0,14 M NaCl plus 0,5% Agar-Agar eingesetzt. Die Referenzelektrode war eine übliche Makro-Elektrode, gleich wie sie in der oben genannten Veröffentlichung beschrieben ist, jedoch ausgestattet mit einem dünnen Glasspitz. Die Vergleichselektrode wurde von oben in den Elektrodenkanal der ionenselektiven Minieleketrode eingetaucht.

Die Probe-Lösungen wurden mit einer Glasinjektionsspritze injiziert und nach der Messung mit Vakuum entfernt. Das Fassungsvermögen des Probekanals betrug 0,1 ml. Nach der Einspritzung einer Probelösung wurde die Messung während 4 Min. durchgeführt, indem man die EMK-Werte in Intervallen von 20 Sekunden bestimmte.

Die ionenselektiven Membranen wurden nach dem Verfahren hergestellt, das von Anker, P.; Wieland; E.; Ammann, D.; Dohner, R.; Asper, R. und Simon, W. in Anal. Chem. 1981, 53, 1970 beschrieben ist, indem man eine Verbindung der Formel I als ionenselektive Komponente einsetzte oder eine Verbindung zu Vergleichszwecken als ionenselektive Komponente einsetzte und ferner Polyvinylchlorid als Grundmaterial verwendete und gegebenenfalls ausserdem einen der weiter oben genannten Weichmacher und der weiter vorne genannten weiteren Komponenten verwendete.

Bei der Durchführung der weiter oben beschriebenen Bestimmung mit Makroelektroden wurden die ionenempfindlichen Membranen in Philips Elektrodenkörpern IS 560 (N.V. Philips, Eindhoven, NL) montiert und die Elektroden über Nacht in etwa 2 ml der Elektrodenfüllungslösung konditioniert, ehe sie verwendet wurden.

Sowohl mit Hilfe der Makroelektroden als auch mit Hilfe der oben beschriebenen DurchflussMinielektroden wurde mit den erfindungsgemässen ionenselektiven Membranen, welche die Verbindungen der Formel I als ionenselektive Komponente enthielten, und auch mit den ionenselektiven Membranen zu Vergleichszwecken, welche bisher bekannte Dicarbonsäurediamide als ionenselektive Komponente enthielten, der Wert

$$\log K^{Pot}_{LiNA}$$

bestimmt.

Ein weiterer Gegenstand der vorliegenden Erfindung sind Testvorrichtungen zur Bestimmung von Lithiumionen, welche als Komponente ein erfindungsgemässes Dicarbonsäurediamid der Formel I enthalten.

Teststreifen zur Bestimmung der Konzentration von Ionen, die eine ionenselektive Komponente enthalten, sind in der europäischen Patentveröffentlichung 0 153 641 beschrieben.

Die erfindungsgemässen Testvorrichtungen, beispielsweise Bänder oder Streifen, enthalten vorzugsweise eine Polymermatrix, z.B. aus Polyvinylchlorid. Vorzugsweise enthalten derartige Testvorrichtungen zusätzlich noch einen Indikator, der es erlaubt, eine Aenderung des pH-Wertes festzustellen. Dieser Indikator kann beispielsweise einer der üblichen pH-Indikatoren sein, die eine Aenderung des pH-Wertes durch einen Farbwechsel anzeigen. Wenn eine solche Testvorrichtung, die als ionenselektive Komponente ein erfindungsgemässes Dicarbonsäurediamid der Formel I enthält, mit einem flüssigen Medium, das Lithiumionen enthält, in Berührung gebracht wird, dann bildet sich in dieser Testvorrichtung ein Komplex zwischen den Lithiumionen und den erfindungsgemässen Verbindungen der Formel I aus. Durch diese Komplexbildungsreaktion wird ausserdem der pH-Wert in der Testvorrichtung geändert und diese Aenderung des pH-Wertes ist durch das Ansprechen des pH-Indikators feststellbar.

Die erfindungsgemässen Testvorrichtungen, beispielsweise Teststreifen, ermöglichen es, Lithiumionen in flüssigen Medien, wie zum Beispiel Körperflüssigkeiten, rasch und einfach festzustellen.

Die Erfindung sei nun anhand von Beispielen näher erläutert:

## Beispiel 1

### Herstellung von N,N,N',N'-Tetracyclohexyl-5-butyl-5-äthyl-3,7-dioxaazelainsäure-diamid

Diese Verbindung ist die erfindungsgemässe Verbindung der Formel VI.

A) Herstellung des 5-Butyl-5-äthyl-3,7-dioxaazelainsäure-diäthylesters

5,0 g (31,2 mmol) an 2-Butyl-2-äthyl-1,3-propandiol (purum, Fluka AG, Buchs, Schweiz) und 6,5 ml (62,4 mmol) Diazoessigsäure-äthylester (purum, Fluka AG) wurden zu 50 ml getrockneten Methylenchlorid zugesetzt. Durch die Lösung wurde Stickstoffgas geleitet und man kühlte in einem Eisbad auf eine Temperatur von 0 - 5°C. 1 ml an Bor-trifluorid-ätherat (mit Diäthyläther, pract., Fluka AG) wurden langsam mit Hilfe einer Injektionsspritze zugesetzt. Eine heftige Reaktion unter Stickstoffentwicklung lief ab.

Nachdem die gesamte Menge an Bortrifluorid-ätherat zugesetzt worden war, rührte man die Lösung bei Zimmertemperatur während einer Stunde und anschliessend wurde 1¼ Stunden lang bei 45° C unter Rückfluss gekocht. Das Lösungsmittel wurde abgedampft. Das verbleibende Rohrprodukt wurde durch Flash-Chromatographie auf Silicagel (Silicagel 60, Fluka AG) unter Verwendung einer Mischung aus 8 Teilen Hexan und 2 Teilen Essigsäureäthylester als Laufmittel gereinigt.

Man erhielt 6,08 g (18,3 mmol) des im Titel genannten Produktes, entsprechend einer Ausbeute von 58,6% der Theorie. Das Infrarotspektrum der Flüssigkeit zeigte einen Peak bei 1755 $cm^{-1}$.

B) Herstellung der 5-Butyl-5-äthyl-3,7-dioxaazelainsäure

6,08 g (18,3 mmol) des 5-Butyl-äthyl-3,7-dioxa-azelainsäure-diäthylesters wurden in 100 ml einer Mischung aus 4 Teilen Methanol plus 1 Teil Wasser gelöst. Man setzte 3,6 g (64 mmol) Kaliumhydroxid (purum, Siegfried AG, Zofingen, Schweiz) zu und kochte die Mischung 19 Stunden lang bei 80° C unter Rückfluss.

Nach dem Kühlen auf Zimmertemperatur säuerte man zur Erreichung eines pH-Wertes von etwa 1 unter Verwendung von 6 molarer Chlorwasserstoffsäure an. Die Lösungsmittel wurden abgedampft und der Rückstand mit Aceton extrahiert. Die Acetonlösung wurde über Magnesiumsulfat getrocknet und anschliessend das Lösungsmittel unter Vakuum entfernt.

Die Ausbeute betrug etwa 5 g (18 mmol), entsprechend mehr als 95 % der theoretischen Ausbeute.

Im Infrarotspektrum, aufgenommen in Chloroform, zeigte sich ein breiter Peak im Bereich von 3500-2500 $cm^{-1}$, sowie ein Peak bei 1720 $cm^{-1}$.

C) Herstellung von 5-Butyl-5-äthyl-3,7-dioxa-azelainsäure-dichlorid

5,0 g (18,1 mmol) an der 5-Butyl-5-äthyl-3,7-dioxa-azelainsäure, 5,2 ml (72,4 mmol) an Thionylchlorid (purum, Fluka AG), sowie 3 Tropfen an N,N-Dimethylformamid (puriss. p.a., Fluka AG) wurden in 100 ml Toluol gelöst und man kochte bei 100-120° C eine Stunde unter Rückfluss. Nach dem Abdampfen des Lösungsmittels wurde des rohe Produkt unter Vakuum destilliert, und zwar bei einem Druck von 0,08 mm Hg bei 205° C.

Die Ausbeute betrug 4,06 g (13,0 mmol), entsprechend 71,6 % der theoretischen Ausbeute.

Das Infrarotspektrum der Flüssigkeit zeigte Peaks bei 1805 $cm^{-1}$ und 1750$cm^{-1}$.

D) Herstellung des N,N,N', N'-Tetracyclohexyl-5-butyl-5-äthyl-3,7-dioxaazelainsäure-diamides

4,94 g (27,2 mmol) an Dicyclohexylamin (puriss. p.a., Fluka AG) und 2,73 g (27,0 mmol) an Triäthylamin (wasserfrei, Siegfried AG) wurden in etwa 150 ml Methylenchlorid gelöst. 4,06 g (13,0 mmol) an 5-Butyl-5-äthyl-3,7-dioxa-azelainsäure-dichlorid, gelöst in 20 ml Methylenchlorid, wurden langsam zu der gerührten Lösung zugesetzt. Die Mischung wurde 18 Stunden lang bei Zimmertemperatur gerührt und dann mehrmals mit Wasser gewaschen.

Die Methylenchloridphase wurde über Magnesiumsulfat getrocknet und das Lösungsmittel abgedampft. Man erhielt 5,6 g (9,3 mmol) eines Produktes, entsprechend 71,5 % der theoretischen Ausbeute. Dieses Produkt wurde auf einer Silicagelsäule, die mit 240 g Silicagel 60 der Fluka AG gefüllt war, gereinigt. Die ausgewählte Fraktion ergab 0,11 g (0,18 mmol) des gereinigten Produktes, entsprechend 1,4 % der theoretischen Ausbeute.

Im Infrarotspektrum, aufgenommen in Chloroform, traten Peaks bei 3000 $cm^{-1}$, 2930 $cm^{-1}$ und 1630 $cm^{-1}$ auf.

Das kernmagnetische Resonanzspektrum ($^1$H-NMR), aufgenommen in $CDCl_3$, ergab:
0,81 (t, 3H, $CH_3CH_2CH_2CH_2$); 0,88 (t, 3H, $CH_3CH_2$); 1,06–1,83 (m, 44H, $CH_2$ des Cyclohexylringes und aliphatische Ketten; 2,40–2,47 (m, 4H, $NCHCH_2$); 2,87–2,93 (m, 2H, NCH); 3,32 (s, 4H, $CH_2OCH_2CO$); 3,50–3,57 (m, 2H, NCH); 4,02 (s, 4H, $CH_2OCH_2CO$).

Das Massenspektrum ergab die folgenden Werte:
602 (4, $M^+$), 381 (10), 380 (37, $M^+$-($CH_2CON(C_6H_{11})_2$)), 365 (6), 364 (4, $M^+$-($OCH_2CON(C_6H_{11})_2$)), 180 (5, $N(C_6H_{11})_2$), 160 (24), 57 (100, $(CH_2)_3CH_3$), 29 (31, $CH_2CH_3$).

Das kernmagnetische Resonanzspektrum ($^{13}$C-NMR), aufgenommen in ($CDCl_3$) ergab:
7,7 (q, $CH_3$); 14,2 (q, $CH_3$); 23,6–31,4 (m, 24× $CH_2$ der Butyl-, Äthyl- und Cyclohexylsubstituenten); 41,2 (s, $C(CH_2)_4$); 56,0 (d, 2× $NCH(C_5H_{10})$); 57,3 (d, 2× $NCH(C_5H_{10})$); 73,4 (t, 2× $CH_2OCH_2CO$); 74,2 (t, 2× $CH_2OCH_2CO$); 168,5 (s, 2×CO).

Die Elementaranalyse ergab die folgenden Werte:
berechnet für $C_{37}H_{66}N_2O_4$;C = 73,71, H = 11,03, N = 4,65,
gefunden C = 73,71, H = 10,84 N = 4,56.

Beispiel 2

Nach dem in Beispiel 1 bexchriebenen Verfahren wurden die erfindungsgemässen Verbindungen der Formeln II, III, IV und V hergestellt. Die für die Synthese der Verbindungen der Formel II, III und V als Ausgangsmaterial benötigten Diole wurden von der Fluka AG bezogen und das für die Synthese der Synthese der Verbindung der Formel IV benötigte Diol wurde von der Firma Aldrich, Steinheim, BRD, bezogen.

Die Elementaranalyse der erhaltenen Produkte ergab die folgenden Werte:

N,N,N'-N'-Tetracyclohexyl-5,5-dimethyl-3,7-dioxaazelainsäu e-diamid

Die hergestellte Verbindung ist das Produkt der Formel II,
berechnet für $C_{33}H_{58}N_2O_4$;C = 72,53, H = 10,70, N = 5,13,
gefundenC = 72,61, H = 10,61, N = 4,95.

N,N,N', N'-Tetracyclohexyl-3,7-dioxa-azelainsäure-diamid

Die hergestellte Verbindung ist das Produkt der Formel III,
berechnet für $C_{31}H_{54}N_2O_4$;C = 71,77, H = 10,49, N = 5,40,
gefundenC = 71,74, H = 10,55, N = 5,31.

N,N,N', N'-Tetracyclohexyl-4-methyl-3,7-dioxa-azelainsäure-diamid

Die hergestellte Verbindung ist das Produkt der Formel IV,
berechnet für $C_{32}H_{56}N_2O_4$;C = 72,14, H = 10,59, N = 5,26,
gefundenC = 72,08, H = 10,62, N = 5,14.

N,N,N', N'-Tetracyclohexyl-4-isopropyl-5,5-dimethyl-3,7-dioxa-azelainsäure-diamid

Die hergestellte Verbindung ist das Produkt der Formel V,
berechnet für $C_{36}H_{64}N_2O_4$;C = 73,42, H = 10,95, N = 4,76,
gefundenC = 73,09, H = 10,76, N = 4,70.

Beispiel 3

Herstellung eines Lithiumkomplexes des N,N,N', N'-Tetracyclohexyl-5,5-dimethyl-3,7-dioxa-azelainsäure-diamides

Es wurde der entsprechende Lithiumkomplex der erfindungsgemässen Verbindung der Formel II mit dem Lithium-Rhodanid der Formel LiNCS hergestellt.

300 mg (0,55 mmol) an dem N,N,N', N'-Tetracyclohexyl-5,5-dimethyl-3,7-dioxa-azelainsäure-diamid und 17,8 mg (0,27 mmol) an dem LiSCN (pract., Fluka AG) wurden in 4 ml Essigsäureäthylester (puriss., Fluka AG) gelöst. Das eingesetzte Lithium-Rhodanid wurde vor seiner Verwendung 24 Stunden lang im Hochvakuum getrocknet. Man liess die Lösung in einem Kolben mit teilweise geöffnetem Verschluss stehen. Nach dem Kristallisieren wurden die Nadeln filtriert.

Man erhielt 100 mg (0,16 mmol) des kristallinen Produktes, entsprechend 29,7% der theoretischen Ausbeute.

Im Infrarotspektrum, aufgenommen in Chloroform, waren Peaks bei 2080 $cm^{-1}$ und 1630 $cm^{-1}$.

Die Elementaranalyse ergab die folgenden Werte:
berechnet für $C_{33}H_{58}N_2O_4$ LiNCS; C = 66,74, H = 9,56, N = 6,87,
gefunden C = 66,89, H = 9,64, N = 6,95.

Beispiel 4

Herstellung von Membranen zur quantitativen Bestimmung von Lithium in biologischen Flüssigkeiten

Die Herstellung der Membranen erfolgte nach dem Verfahren, das in der weiter vorne genannten Veröffentlichung von P. Anker et al. in Anal. Chem. 1981, 53, 1970, beschrieben ist.

Das verwendete Poly(vinylchlorid) war das Produkt PVC S704 hochmolekular, das von der Lonza AG, Visp, Schweiz, stammt und jetzt bei der Fluka AG erhältlich ist.

In sämtlichen Membranen wurde als Weichmacher das Bis(1-butylpentyl)adipat verwendet, und zwar das entsprechende Produkt purum p.a., das von der Fluka AG bezogen wurde.

Es wurden die folgenden Membranen hergestellt:

Membran 1

| Bestandteil | Menge in Gew.-% |
|---|---|
| Verbindung der Formel II | 1,6 |
| Weichmacher | 65,3 |
| Poly(vinylchlorid) | 33,1 |

Membran 2

| Bestandteil | Menge in Gew.-% |
|---|---|
| Verbindung der Formel III | 1,7 |
| Weichmacher | 65,3 |
| Poly(vinylchlorid) | 33,0 |

Membran 3

| Bestandteil | Menge in Gew.-% |
|---|---|
| Verbindung der Formel IV | 1,8 |
| Weichmacher | 65,6 |
| Poly(vinylchlorid) | 32,6 |

Membran 4

| Bestandteil | Menge in Gew.-% |
|---|---|
| Verbindung der Formel V | 1,8 |
| Weichmacher | 65,7 |
| Poly(vinylchlorid) | 32,5 |

Membran 5

| Bestandteil | Menge in Gew.-% |
|---|---|
| Verbindung der Formel VI | 2,0 |
| Weichmacher | 65,6 |
| Poly(vinylchlorid) | 32,4 |

Die Membrane 1, 2, 3, 4 und 5 sind erfindungsgemässe Membrane.

Das weiteren wurde eine Membran zu Vergleichszwecken in der gleichen Weise und unter Verwendung des gleichen Polyvinylchlorides und des gleichen Weichmachers hergestellt.

Membran zu Vergleichszwecken

| Bestandteil | Menge in Gew.-% |
|---|---|
| Verbindung der Formel B | 1,2 |
| Weichmacher | 66,9 |
| Poly(vinylchlorid) | 31,9 |

Beispiel 5

EMK-Messungen

Zur Durchführung der EMK-Messungen wurden die Elektrolytlösungen unter Verwendung von in Quarzapparaturen doppelt destilliertem Wasser hergestellt und die eingesetzten Chloridsalze waren äusserst rein, und zwar die Produkte purum p.a., oder puriss. p.a., der Fluka AG, Buchs, Schweiz und pro analysis der E. Merck, Darmstadt, BRD.

Das verwendete Blutserum wurde vom Medizinisch-Chemischen Zentrallaboratorium des Univer sitätsspitals Zürich, Schweiz, bezogen. In diesem Blutserum wurden die Konzentrationen an Natriumionen, Kaliumionen, der Gesamtgehalt an Calciumionen und Lithiumionen, durch Flammenphotometrie oder Atomabsorptionsspektrometrie bestimmt. Nach diesem Verfahren wurde in dem verwendeten Blutserum eine Lithiumkonzentration von 0,12 mmol/l gemessen. Bei der Bestimmung der Lithiumkonzentrationen mit Hilfe der erfindungsgemässen Membranen wurden zu dem Blutserum jeweils kleine Mengen einer Lösung zugesetzt, die 0,05 Mol an Lithiumchlorid und 0,135 Mol an Natriumchlorid enthielt. Jeweils wurde nach der Zugabe dieser Lithium-Natrium Lösung das Serum eine kurze Zeit lang gemischt und dann wurden für die Bestimmungen Probenvolumina von 0,1 ml entnommen.

Die EMK-Messungen wurden sowohl mit der Makroelektrode als auch der Mikro=Durchflusselektrode nach dem bereits vorher beschriebenen Verfahren durchgeführt.

Es zeigte sich dabei, dass die erfindungsgemässen Membranen 1, 2, 3, 4 und 5 eine ausreichend hohe Selektivität für Lithium aufweisen, sodass mit ihnen in den Serumproben die Lithiumkonzentration im klinischen Bereich von 0,7 - 1,5 mmol $Li^+$ pro Liter bestimmt werden konnte, während in den entsprechenden Lösungen ein Hintergrund von 0,14 Mol pro Liter an Natrium anwesend war.

Die Membran zu Vergleichszwecken besass keine ausreichend hohe Selektivität für Lithium, sodass bei der Anwesenheit der angegebenen grossen Mengen an störenden Natriumionen eine Bestimmung der Lithiumkonzentration nicht mehr möglich war. Die erfindungsgemässen Membranen 1, 2, 3, 4 und 5 waren zur quantitativen Bestimmung der Lithiumionen in den Serumproben geeignet. Sie zeichneten sich ferner durch grosse Beständigkeit der Signale und durch sehr rasches Ansprechen aus. Innerhalb von 20 - 30 Sekunden konnte nämlich mit diesen Membranen der endgültige EMK-Wert gemessen werden.

Ferner zeigte es sich, dass nach mehrmonatiger häufiger Verwendung der Membranen zur Bestimmung der Lithiumkonzentrationen in Serumproben und im Gesamtblut keine Alterungs- Erscheinungen feststellbar waren.

**Patentansprüche für die Vertragsstaaten BE, DE, FR, GB, IT, LU, NL, SE**

1. Dicarbonsäurediamide, dadurch gekennzeichnet, das sie die Formel I

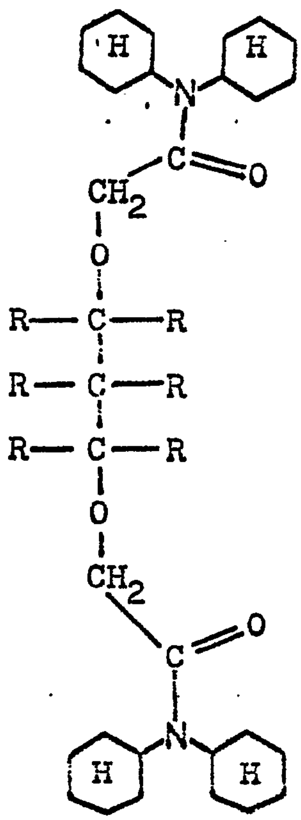

I

aufweisen, wobei in dieser Formel I die Reste R unabhängig voneinander die Bedeutung von Wasserstoffatomen, verzweigtkettigen oder geradkettigen Alkylresten mit 1 - 20 Kohlenstoffatomen, verzweigtkettigen oder geradkettigen Alkenylresten mit 2 - 20 Kohlenstoffatomen oder verzweigtkettigen oder geradkettigen Alkinylresten mit 2 - 20 Kohlenstoffatomen aufweisen.

2. Dicarbonsäurediamide nach Anspruch 1, dadurch gekennzeichnet, dass die Reste R unabhängig voneinander die Bedeutung von Wasserstoffatomen oder geradkettigen oder verzweigtkettigen Alkylresten mit 1 - 15 Kohlenstoffatomen, vorzugsweise geradkettigen oder verzweigtkettigen Alkylresten mit 1 - 8 Kohlenstoffatomen aufweisen.

3. Dicarbonsäurediamide nach Anspruch 1 oder 2, dadurch gekennzeichnet, dass in ihnen mindestens zwei der Reste R, vorzugsweise 3 - 6 der Reste R die Bedeutung von Wasserstoffatomen aufweisen.

4. Dicarbonsäurediamide gemäss einem der Ansprüche 1 bis 3, dadurch gekennzeichnet, dass sie die folgenden Formeln II bis VI

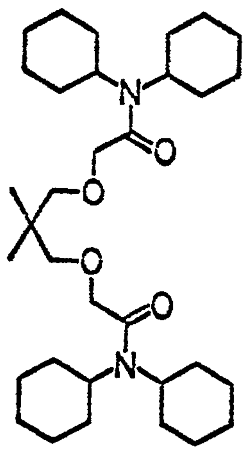

II

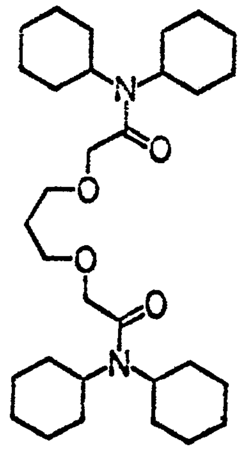

III

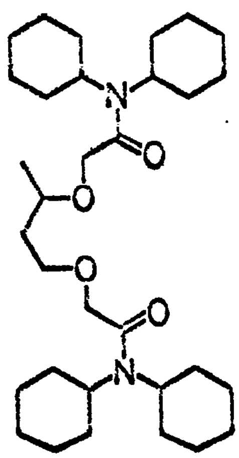

IV

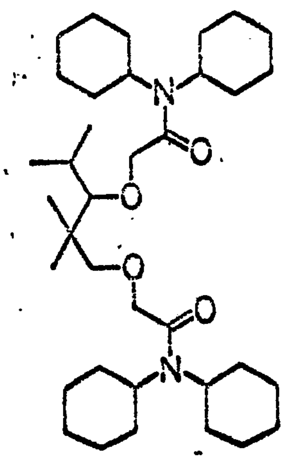

V

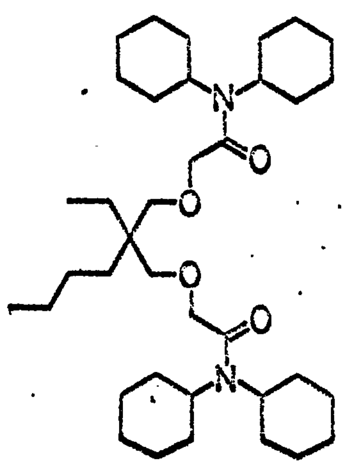

VI

aufweisen.

5. Lithiumkomplexe der Dicarbonsäurediamide der Formel I gemäss Anspruch 1, dadurch gekennzeichnet, dass sie 1:1 Komplexe aus einem Lithiumion und einem Molekül des Komplexbildners der Formel I sind.
6. Lithiumkomplexe gemäss Anspruch 5, dadurch gekennzeichnet, dass sie 1:1 Lithiumkomplexe der Dicarbonsäurediamide gemäss einem der Ansprüche 2 bis 4 sind.
7. Verfahren zur Herstellung der Dicarbonsäurediamide der Formel I

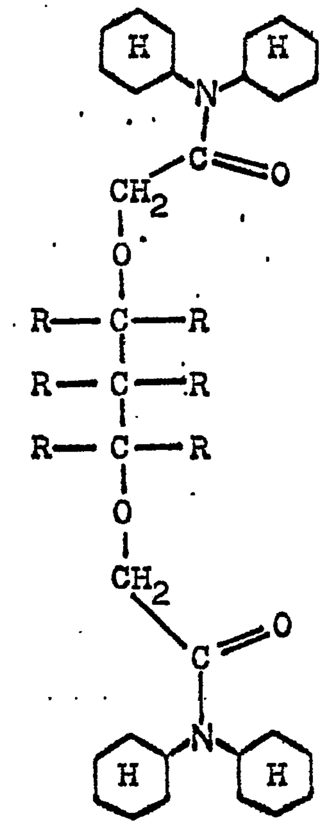

I

gemäss Anspruch 1, in welchen die Reste R unabhängig voneinander die Bedeutung von Wasserstoffatomen, verzweigtkettigen oder geradkettigen Alkylresten mit 1 - 20 Kohlenstoffatomen, verzweigtkettigen oder geradkettigen Alkenylresten mit 2 - 20 Kohlenstoffatomen oder verzweigtkettigen oder geradkettigen Alkinylresten mit 2 - 20 Kohlenstoffatomen aufweisen, dadurch gekennzeichnet, dass man ein Diol der Formel VII

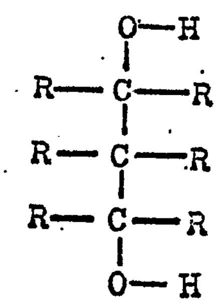

VII

entweder mit einem Säureamid der Formel VIII

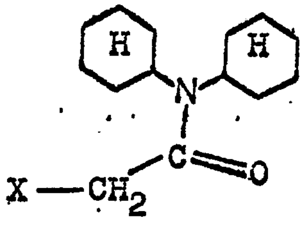

VIII

worin
X eine abspaltbare Gruppierung darstellt, zu dem Dicarbonsäurediamid der Formel I veräthert oder dass man das Diol der Formel VII mit einem Ester der Formel IX

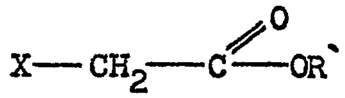

IX

in welchem
X eine abspaltbare Gruppierung darstellt und
R' ein aliphatischer, cycloaliphatischer, aromatischer oder heterocyclischer Rest ist,
veräthert, wobei sich ein Dicarbonsäurediester der Formel X

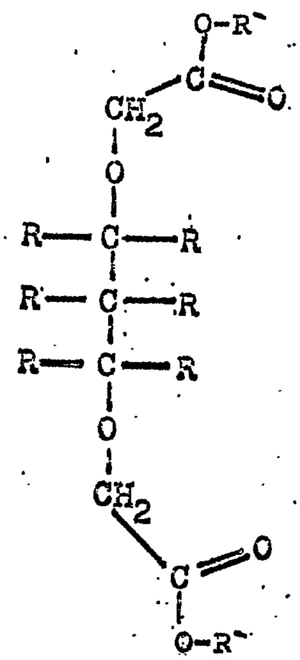

X

bildet
und diesen Ester direkt oder nach Verseifung und Überführung in ein aktives Dicarbonsäurederivat durch Umsetzung mit dem Dicyclohexylamin der Formel XI

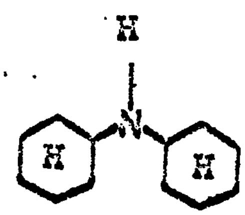

XI

in das Dicarbonsäurediamid der Formel I überführt.

8. Verfahren nach Anspruch 7, dadurch gekennzeichnet, dass man ein Dicarbonsäurediamid gemäss einem der Ansprüche 2–4 herstellt.

9. Ionenselektive Membran zur Bestimmung der Konzentration von Lithiumionen, dadurch gekennzeichnet, dass sie als ionenselektive Komponente ein Dicarbonsäurediamid der Formel I gemäss Anspruch 1 enthält.

10. Ionenselektive Membran gemäss Anspruch 9, dadurch gekennzeichnet, dass sie als ionenselektive Komponente ein Dicarbonsäurediamid gemäss einem der Ansprüche 2 - 4 enthält.

11. Ionenselektive Membran gemäss Anspruch 9 oder 10, dadurch gekennzeichnet, dass sie ausserdem Poly(vinylchlorid) als Matrix für die ionenselektive Komponente enthält.

12. Ionenselektive Membran gemäss Anspruch 11, dadurch gekennzeichnet, dass sie Polyvinylchlorid als Matrix une einen Weichmacher, vorzugsweise einen lipophilen Weichmacher, enthält, beispielsweise einen Esterweichmacher wie Bis(1-butylpentyl)-adipat.

13. Testvorrichtung zur Testung auf Lithiumionen in flüssigen Medien, dadurch gekennzeichnet, dass sie als Komponente ein Dicarbonsäurediamid der Formel I gemäss Anspruch 1 enthält.

14. Testvorrichtung gemäss Anspruch 13, dadurch gekennzeichnet, dass sie als Komponente ein Dicarbonsäurediamid gemäss einem der Ansprüche 2 - 4 enthält.

15. Testvorrichtung nach Anspruch 13 oder 14, dadurch gekennzeichnet, dass sie ausserdem eine Polymermatrix und vorzugsweise zusätzlich einen Indikator enthält, der eine Aenderung des pH-Wertes anzeigt, beispielsweise eine Aenderung des pH-Wertes durch einen Farbumschlag anzeigt.

**Patentansprüche für die Vertragsstaaten: AT, ES.**

1. Verfahren zur Herstellung von neuen Dicarbonsäurediamiden der Formel I

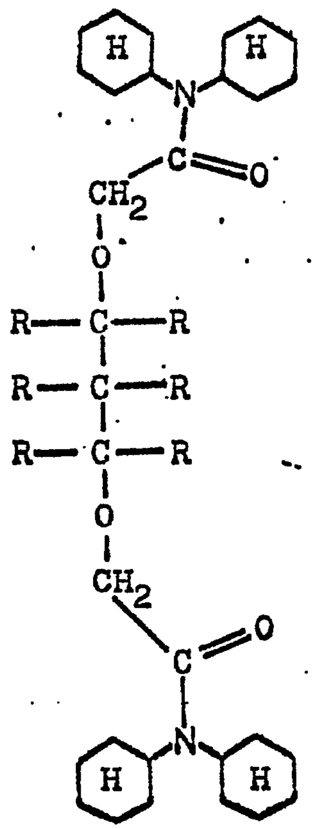

I

in welchen die Reste R unabhängig voneinander die Bedeutung von Wasserstoffatomen, verzweigtkettigen oder geradkettigen Alkylresten mit 1 - 20 Kohlenstoffatomen, verzweigtkettigen oder geradkettigen Alkenylresten mit 2 - 20 Kohlenstoffatomen oder verzweigtkettigen oder geradkettigen Alkinylresten mit 2-20 Kohlenstoffatomen aufweisen, dadurch gekennzeichnet, dass man ein Diol Formel VII

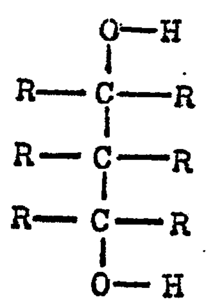

VII

entweder mit einem Säureamid der Formel VIII

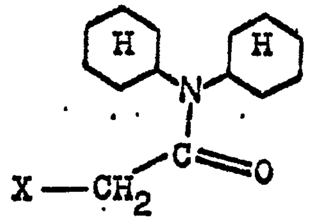

VIII

worin
X eine abspaltbare Gruppierung darstellt, zu dem Dicarbonsäurediamid der Formel I veräthert oder dass man das Diol der Formel VII mit einem Ester der Formel IX

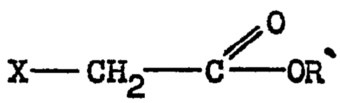

IX

in welchem
X eine abspaltbare Gruppierung darstellt und
R′ ein aliphatischer, cycloaliphatischer, aromatischer oder heterocyclischer Rest ist,
veräthert, wobei sich ein Dicarbonsäurediester der Formel X

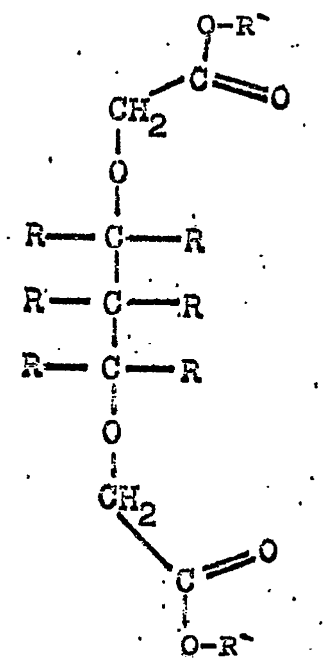

X

bildet
und diesen Ester direkt oder nach Verseifung und Überführung in ein aktives Dicarbonsäurederivat durch Umsetzung mit dem Dicyclohexylamin der Formel XI

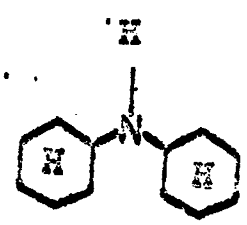

XI

in das Dicarbonsäurediamid der Formel I überführt.

2. Verfahren nach Anspruch 1, dadurch gekennzeichnet, dass man Dicarbonsäurediamide der Formel I herstellt, in welchen die Reste R unabhängig voneinander die Bedeutung von Wasserstoffatomen oder geradkettigen oder verzweigtkettigen Alkylresten mit 1 - 15 Kohlenstoffatomen, vorzugsweise geradkettigen oder verzweigtkettigen Alkylresten mit 1 - 8 Kohlenstoffatomen aufweisen.

3. Verfahren nach Anspruch 1 oder 2, dadurch gekennzeichnet, dass man Dicarbonsäurediamide her-

stellt, in denen mindestens zwei der Reste R, vorzugsweise 3 - 6 der Reste R die Bedeutung von Wasserstoffatomen aufweisen.

4. Verfahren nach Anspruch 3, dadurch gekennzeichnet, dass man Dicarbonsäurediamide herstellt, welche die folgenden Formeln II bis VI

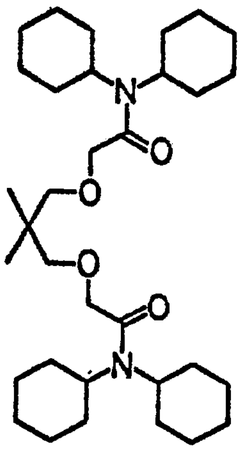

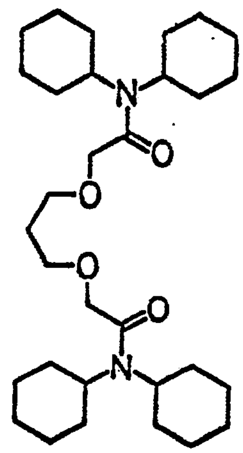

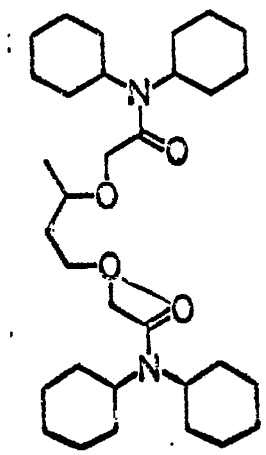

IV

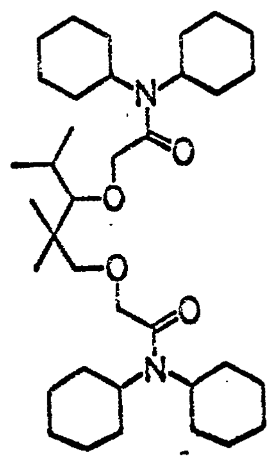

V

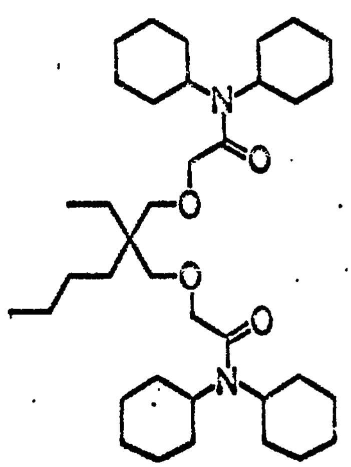

aufweisen.

5. Verfahren zur Herstellung von Lithiumkomplexem der Dicarbonsäurediamide der Formel I, dadurch gekennzeichnet, dass man die Verbindungen der Formel I mit Lithiumionen in Berührung bringt, wobei 1:1 Komplexe aus einem Lithiumion mit einem Molekül des Komplexbildners enstehen.

6. Verfahren nach Anspruch 5, dadurch gekennzeichnet, dass man die Lithiumkomplexe der nach dem Verfahren gemäss einem der Ansprüche 2 - 4 erzeugten Dicarbonsäurediamide herstellt.

7. Ionenselektive Membran zur Bestimmung der Konzentration von Lithiumionen, dadurch gekennzeichnet, dass sie als ionenselektive Komponente ein nach dem Verfahren gemäss Anspruch 1 hergestelltes Dicarbonsäurediamid der Formel I enthält.

8. Ionenselektive Membran gemäss Anspruch 7, dadurch gekennzeichnet, dass sie als ionenselektive Komponente ein nach dem Verfahren gemäss einem der Ansprüche 2 - 4 hergestelltes Dicarbonsäurediamid enthält.

9. Ionenselektive Membran gemäss Anspruch 7 oder 8, dadurch gekennzeichnet, dass sie ausserdem Poly(vinylchlorid) als Matrix für die ionenselektive Komponente enthält.

10. Ionenselektive Membran gemäss Anspruch 9, dadurch gekennzeichnet, dass sie Polyvinylchlorid als Matrix und einen Weichmacher, vorzugsweise einen lipophilen Weichmacher, enthält, beispielsweise einen Esterweichmacher wie Bis (1-butylpentyl)-adipat.

11. Testvorrichtung zur Testung auf Lithiumionen in flüssigen Medien, dadurch gekennzeichnet, das sie als Komponente ein nach dem Verfahren gemäss Anspruch 1 hergestelltes Dicarbonsäurediamid der Formel I enthält.

12. Testvorrichtung gemäss Anspruch 11, dadurch gekennzeichnet, dass sie als Komponente ein nach dem Verfahren gemäss einem der Ansprüche 2 - 4 hergestelltes Dicarbonsäurediamid enthält.

13. Testvorrichtung nach Anspruch 11 oder 12, dadurch gekennzeichnet, dass sie ausserdem eine Polymermatrix und vorzugsweidse zusätzlich einen Indikator enthält, der eine Aenderung des pH-Wertes anzeigt, beispielsweise eine Aenderung des pH-Wertes durch einen Farbumschlag anzeigt.

**Claims for the contracting states: BE, DE, FR, GB, IT, LU, NL, SE**

1. Dicarboxylic acid diamides, characterised in that they exhibit Formula I

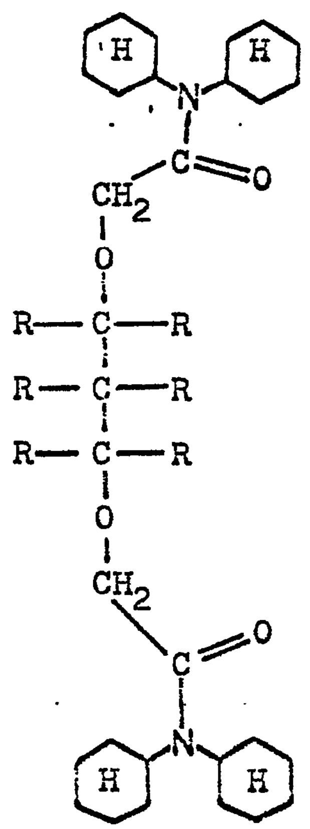

I

the R groups in this Formula I signifying independently of each other hydrogen atoms, branched-chain or straight-chain alkyl groups with 1–20 carbon atoms, branched-chain or straight-chain alkenyl groups with 2–20 carbon atoms or branched-chain or straight-chain alkynyl groups with 2–20 carbon atoms.

2. Dicarboxylic acid diamides according to Claim 1, characterised in that the R groups signify independently of each other hydrogen atoms or straight-chain or branched-chain alkyl groups with 1–15 carbon

atoms, preferably straight-chain or branched-chain alkyl groups with 1–8 carbon atoms.

3. Dicarboxylic acid diamides according to Claim 1 or 2, characterised in that in them at least two of the R groups, preferably 3–6 of the R groups, signify hydrogen atoms.

4. Dicarboxylic acid diamides according to any one of Claims 1 to 3, characterised in that they exhibit the following Formulae II to VI.

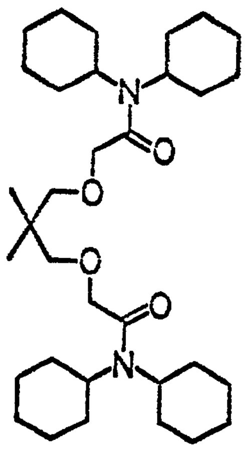

II

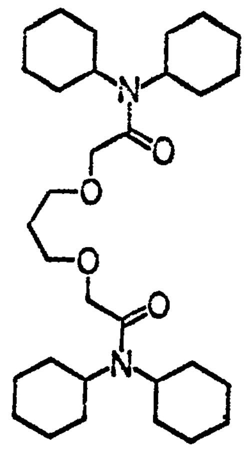

III

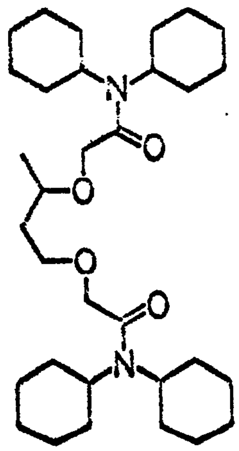

IV

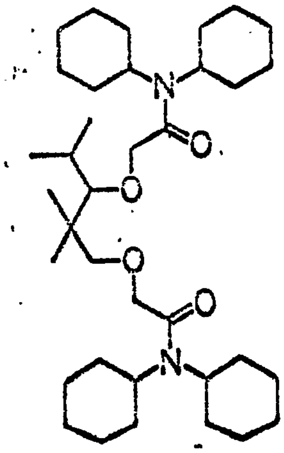

V

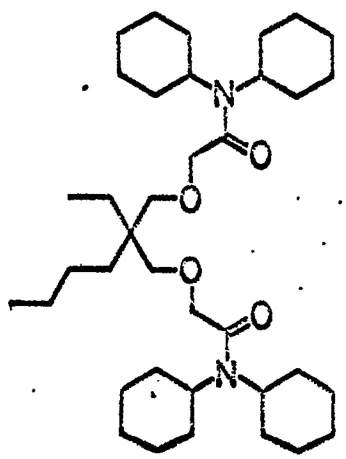

VI

5. Lithium complexes of the dicarboxylic acid diamides of Formula I according to Claim 1, characterised in that they are 1:1 complexes of a lithium ion and a molecule of the complexing agent of Formula I.

6. Lithium complexes according to Claim 5, characterised in that they are 1:1 lithium complexes of the dicarboxylic acid diamides according to any one of Claims 2 to 4.

7. Method of manufacturing the dicarboxylic acid diamides of Formula I

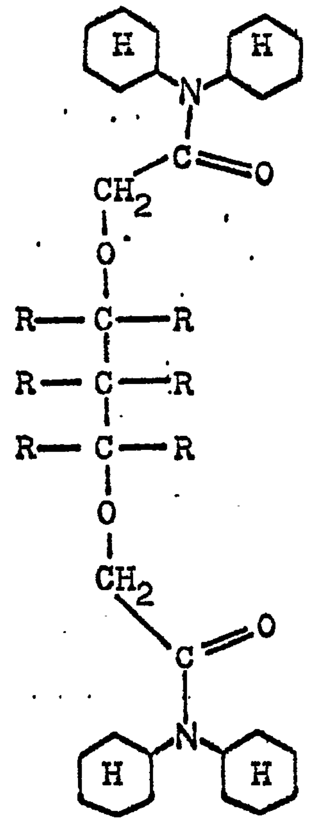

I

according to Claim 1, in which the R groups signify independently of each other hydrogen atoms, branched-chain or straight-chain alkyl groups with 1–20 carbon atoms, branched-chain or straight-chain alkenyl groups with 2–20 carbon atoms or branched-chain or straight-chain alkynyl groups with 2–20 carbon atoms, characterised in that either a diol of Formula VII

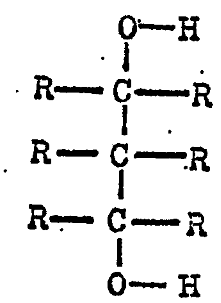

VII

is etherified with an acid amide of Formula VIII

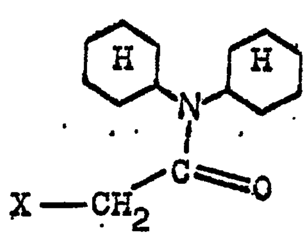

VIII

in which X represents a displaceable grouping, to the dicarboxylic acid diamide of Formula I, or that the diol of Formula VII is etherified with an ester of Formula IX

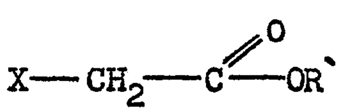

IX

in which X represents a displaceable grouping and R′ an aliphatic, cycloaliphatic, aromatic or heterocyclic group, a dicarboxylic acid diester of Formula X

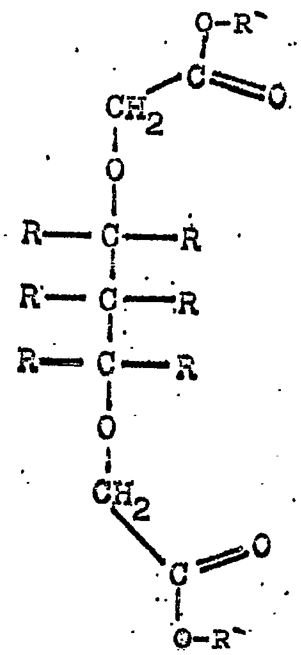

X

being formed and converting this ester into the dicarboxylic acid diamide of Formula I either directly or after saponification and conversion into an active dicarboxylic acid derivative by reaction with the dicyclohexylamine of Formula XI

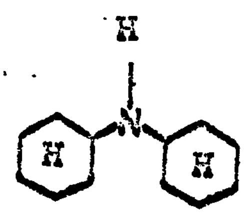

XI

8. Method according to Claim 7, characterised in that a dicarboxylic acid diamide according to any one of Claims 2–4 is manufactured.

9. Ion-selective membrane for determining the concentration of lithium ions, characterised in that it contains as ion-selective component a dicarboxylic acid diamide of Formula I according to Claim 1.

10. Ion-selective membrane according Claim 9, characterised in that it contains as ion-selective component a dicarboxylic acid diamide according to any one of Claims 2–4.

11. Ion-selective membrane according to Claim 9 or 10, characterised in that it also contains poly(vinylchloride) as a matrix for the ion-selective component.

12. Ion-selective membrane according Claim 11, characterised in that it contains polyvinyl chloride as matrix and a plasticiser, preferably a lipophilic plasticiser, for example an ester plasticiser such as bis(1-butyl-pentyl)-adipate.

13. Test apparatus for testing for lithium ions in liquid media, characterised in that it contains as a component a dicarboxylic acid diamide of Formula I according to Claim 1.

14. Test apparatus according to Claim 13, characterised in that it contains as a component a dicarboxylic acid diamide according to any one of Claims 2–4.

15. Test apparatus according to Claim 13 or 14, characterised in that it also contains a polymer matrix and preferably in addition an indicator which indicates a change in the pH value, for example a change in the pH value by means of a colour change.

**Claims for the contracting states: AT, ES**

1. Method of manufacturing novel dicarboxylic acid diamides of Formula I

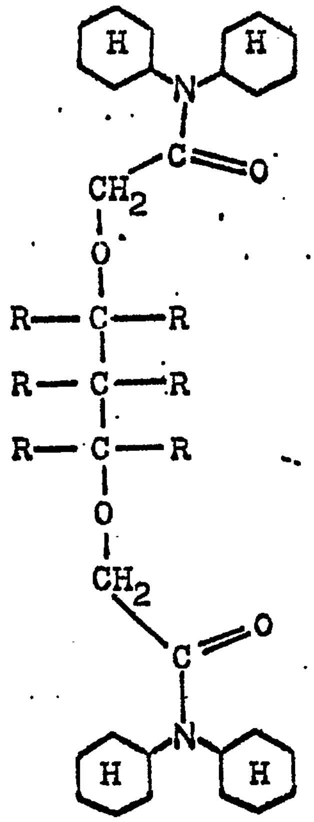

I

in which the R groups signify independently of each other hydrogen atoms, branched-chain or straight-chain alkyl groups with 1–20 carbon atoms, branched-chain or straight-chain alkenyl groups with 2–20 carbon atoms or branched-chain or straight-chain alkynyl groups with 2–20 carbon atoms, characterised in that either a diol of Formula VII

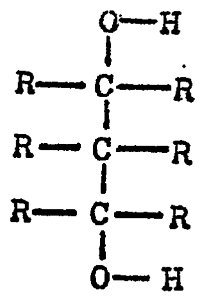

VII

is etherified with an acid amide of Formula VIII

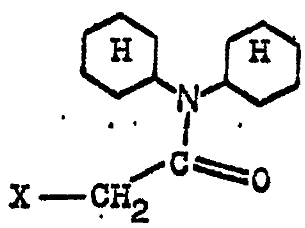

VIII

in which X represents a displaceable grouping, to the dicarboxylic acid diamide of Formula I, or that the diol of Formula VII is etherified with an ester of Formula IX

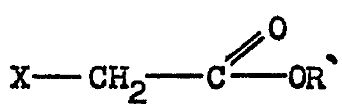

IX

in which X represents a displaceable grouping and R, an aliphatic, cycloaliphatic, aromatic or heterocyclic group, a dicarboxylic acid diester of Formula X

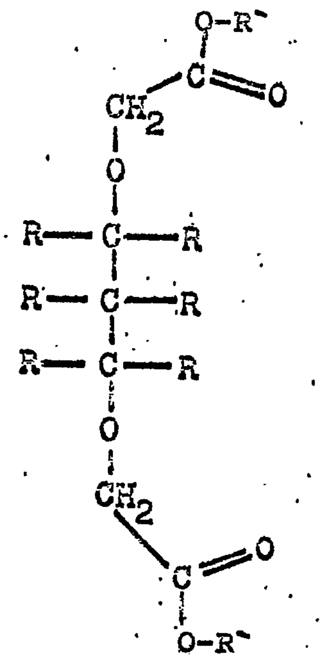

X

being formed and converting this ester into the dicarboxylic acid diamide of Formula I either directly or after saponification and conversion into an active dicarboxylic acid derivative by reaction with the dicyclohexylamine of Formula XI

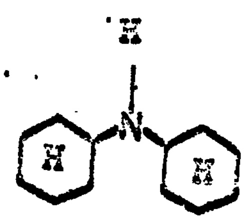

XI

2. Method according to Claim 1, characterised in that dicarboxylic acid diamides of Formula I are prepared in which the R groups signify independently of each other hydrogen atoms or straight-chain or branched-chain alkyl groups with 1–15 carbon atoms, preferably straight-chain or branched-chain alkyl groups with 1-8 carbon atoms.

3. Method according to Claim 1 or 2, characterised in that dicarboxylic acid diamides are prepared in which at least two of the R groups, preferably 3–6 of the R groups, signify hydrogen atoms.

4. Method according to Claim 3, characterised in that dicarboxylic acid diamides are prepared which exhibit the following Formulae II to VI.

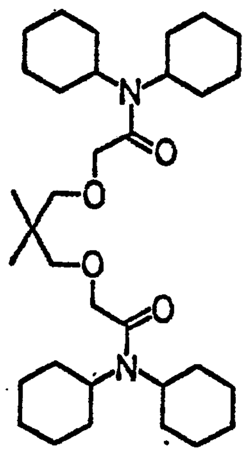

II

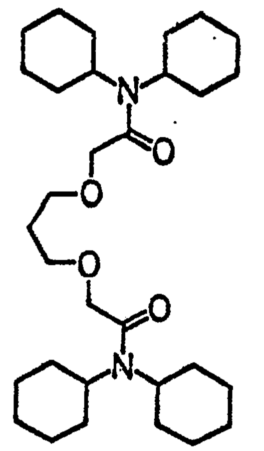

III

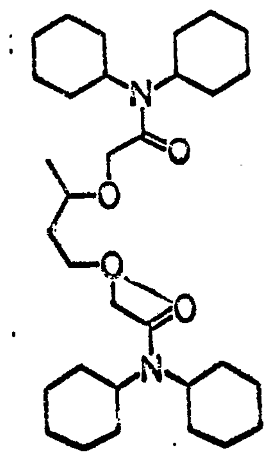

IV

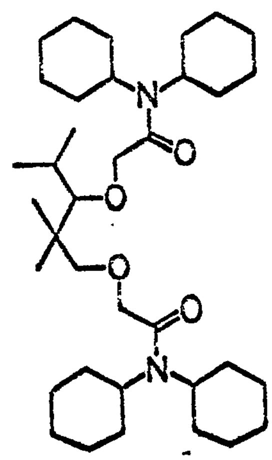

V

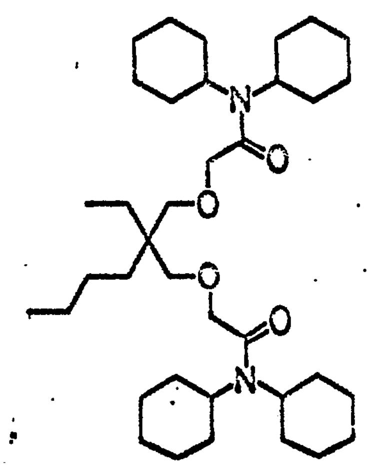

VI

5. Method of preparing lithium complexes of the dicarboxylic acid diamides of Formula I, characterised in that the compounds of Formula I are brought into contact with lithium ions, wherein 1:1 complexes of a lithium ion and a molecule of the complexing agent are produced.

6. Method according to Claim 5, characterised in that 1:1 lithium complexes of the dicarboxylic acid diamides formed according to the method of any one of Claims 2 to 4 are prepared.

7. Ion-selective membrane for determining the concentration of lithium ions, characterised in that it contains as ion-selective component a dicarboxylic acid diamide of Formula I prepared by the method according to Claim 1.

8. Ion-selective membrane according to Claim 7, characterised in that it contains as ion-selective component a dicarboxylic acid diamide prepared by the method according to any one of Claims 2 to 4.

9. Ion-selective membrane according to Claim 7 or 8, characterised in that it also contains poly(vinylchloride) as a matrix for the ion-selective component.

10. Ion-selective membrane according to Claim 9, characterised in that it contains polyvinyl chloride as matrix and a plasticiser, preferably a lipophilic plasticiser, for example an ester plasticiser such as bis(1-butyl-pentyl)-adipate.

11. Test apparatus for testing for lithium ions in liquid media, characterised in that it contains as a component a dicarboxylic acid diamide of Formula I prepared according to the method of Claim 1.

12. Test apparatus according to Claim 11, characterised in that it contains as a component a dicarboxylic acid diamide prepared by the method according to any one of Claims 2 to 4.

13. Test apparatus according to Claim 11 or 12, characterised in that it also contains a polymer matrix and, preferably, in addition an indicator which indicates a change in the pH value, for example a change in the pH value by means of a colour change.

**Revendications pour les Etats contractants: BE, DE, FR, GB, IT, LU, NL, SE**

1. Diamides d'acides dicarboxyliques caractérisés en ce qu'ils présentent la formule

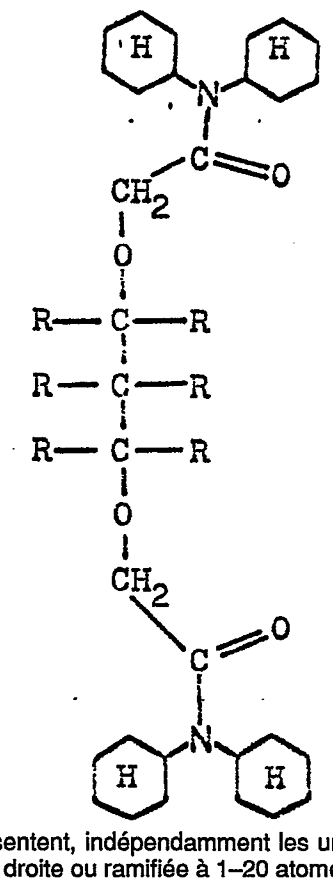

I

où les radicaux R représentent, indépendamment les uns des autres, des atomes d'hydrogène, des radicaux alkyliques à chaîne droite ou ramifiée à 1–20 atomes de carbone, des radicaux alcényliques à chaîne droite ou ramifiée à 2–20 atomes de carbone ou des radicaux alcynyliques à chaîne droite ou ramifiée à 2–20 atomes de carbone.

2. Diamides d'acides dicarboxyliques selon la revendication 1, caractérisés en ce que les radicaux R représentent, indépendamment les uns des autres, des atomes d'hydrogène ou des radicaux alkyliques à chaîne droite ou ramifiée, avec 1–15 atomes de carbone et, de préférence, des radicaux alkyliques à

chaîne droite ou ramifiée avec 1–8 atomes de carbone.

3. Diamides d'acides dicarboxyliques selon la revendication 1 ou 2, caractérisés en ce qu'au moins deux des radicaux R et, de préférence , 3–6 des radicaux R représentent des atomes d'hydrogène.

4. Diamides d'acides dicarboxyliques selon l'une des revendications 1 à 3, caractérisés en ce qu'ils présentent l'une des formules suivantes II à VI

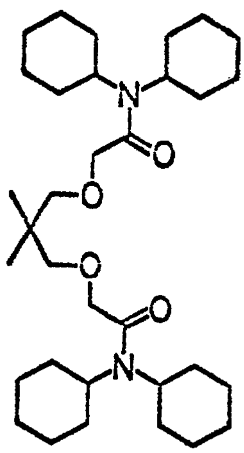

II

:

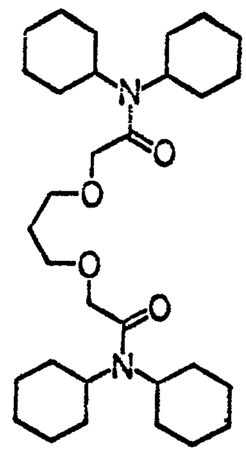

III

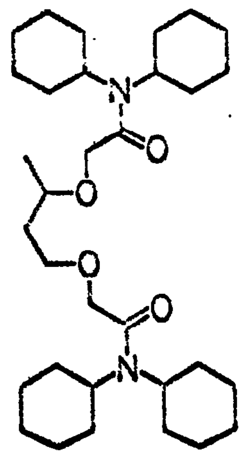

IV

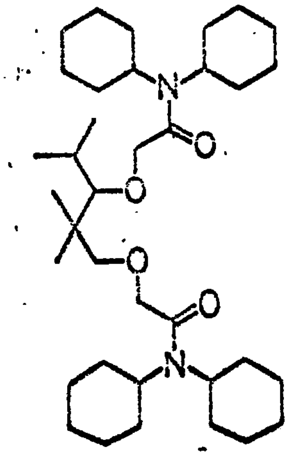

V

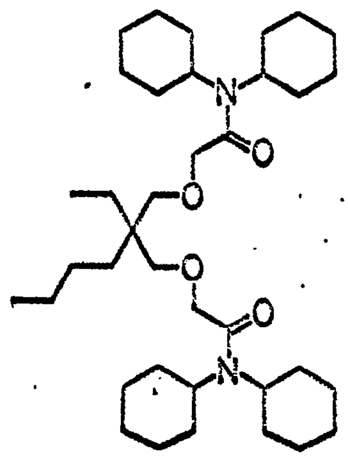

VI

5. Complexes de lithium des diamides d'acides dicarboxyliques de formule I selon la revendication 1, caractérisés en ce qu'ils sont des complexes 1:1 d'un ion lithium et d'une molécule de formateur de complexe de formule I.

6. Complexes de lithium selon la revendication 5, caractérisés en ce que ce sont des complexes 1:1 de lithium des diamides d'acides dicarboxyliques selon l'une des revendications 2 à 4.

7. Procédé pour la production des diamides des acides dicarboxyliques de la formule I, selon la revendication 1

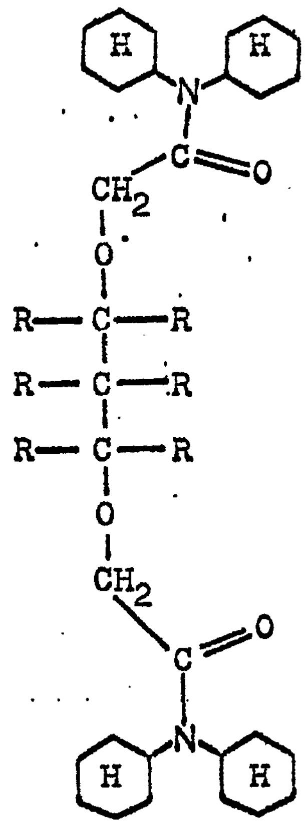

I

dans laquelle les radicaux R représentent, indépendamment les uns des autres, des atomes d'hydrogène, des radicaux alkyliques à chaîne droite ou ramifiée avec 1–20 atomes de carbone, des radicaux alcényliques à chaîne droite ou ramifiée avec 2–20 atomes de carbone, ou des radicaux alcynyliques à chaîne droite ou ramifiée, avec 2 à 20 atomes de carbone, caractérisé en ce que l'on fait réagir un diol de la formule VII

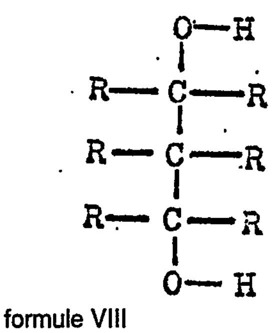

VII

avec un amide d'acide de la formule VIII

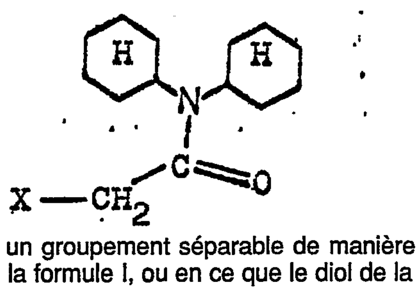

VIII

dans laquelle X représente un groupement séparable de manière à obtenir par éthérification un diamide de l'acide dicarboxylique de la formule I, ou en ce que le diol de la formule VII est mis en réaction avec un ester de la formule IX

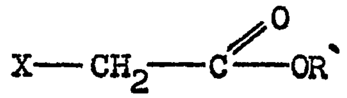

IX

dans laquelle X représente un groupement séparable, et R′ est un radical aliphatique, cycloaliphatique, aromatique ou hétérocyclique, de manière à obtenir par éthérification un diester d'un acide dicarboxylique de la formule X

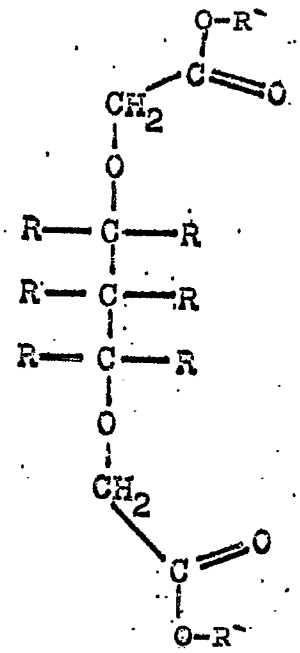

X

et cet ester est transformé directement, ou bien après saponification et transformation en un dérivé actif d'un acide dicarboxylique, par réaction avec la dicyclohexylamine de la formule XI

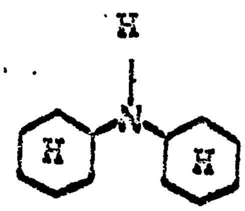

XI

en diamide de l'acide dicarboxylique de la formule I.

8. Procédé selon la revendication 7, caractérisé en ce que l'on produit un diamide d'acide dicarboxylique selon l'une des revendications 2 à 4.

9. Membrane sélective pour les ions pour déterminer la concentration des ions lithium, caractérisée en ce qu'elle contient comme composant sélectif pour les ions, un diamide d'acide dicarboxylique de la formule I, selon la revendication 1.

10. Membrane sélective pour les ions, selon la revendication 9, caractérisée en ce qu'elle contient comme composant sélectif pour les ions un diamide d'acide dicarboxylique selon l'une des revendications 2 à 4.

11. Membrane sélective pour les ions, selon la revendication 9 ou 10, caractérisée en ce qu'elle contient en outre du chlorure de polyvinyle comme matrice pour le composant sélectif pour les ions.

12. Membrane sélective pour les ions selon la revendication 11, caractérisée en ce qu'elle contient du chlorure de polyvinyle comme matrice et un plastifiant et, de préférence, un plastifiant lipophile, par exemple, un ester plastifiant tel que l'adipate de bis (1-butylpentyle).

13. Dispositif d'essai pour déterminer les ions lithium dans les milieux liquides, caractérisé en ce qu'il contient comme composant un diamide d'acide dicarboxylique de la formule I, selon la revendication 1.

14. Dispositif d'essai selon la revendication 13, caractérisé en ce qu'il contient comme composant un diamide de l'acide dicarboxylique selon l'une des revendications 2 à 4.

15. Dispositif d'essai selon la revendication 13 ou 14, caractérisé en ce qu'il contient, en outre, une matrice de polymère et, de préférence également, un indicateur qui indique une modification de la valeur du pH et, par exemple, une modification de la valeur du pH par un virage de couleur.

**Revendications pour les Etats contractants: AT, ES**

1. Procédé de production de nouveaux diamides d'acides dicarboxyliques correspondant à la formule I

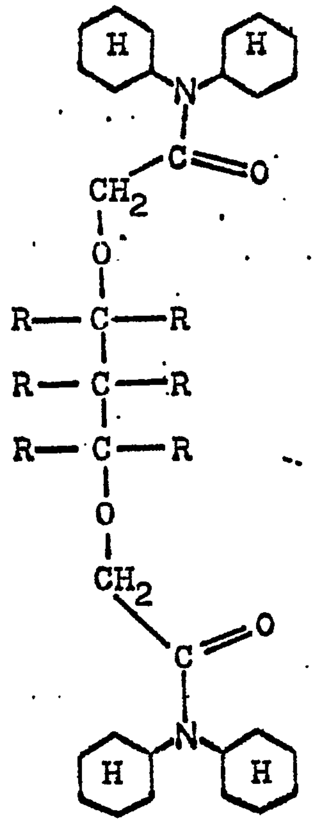

I

où les radicaux R représentent, indépendamment les uns des autres, des atomes d'hydrogène, des radicaux alkyliques à chaîne droite ou ramifiée à 1–20 atomes de carbone, des radicaux alcényliques à chaîne droite ou ramifiée à 2–20 atomes de carbone ou des radicaux alcynyliques à chaîne droite ou ramifiée à 2–20 atomes de carbone, caractérisé en ce qu'un diol de la formule VII

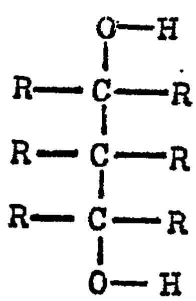

VII

est éthérifié en un diamide d'un acide dicarboxylique répondant à la formule I par un amide d'acide de la formule VIII

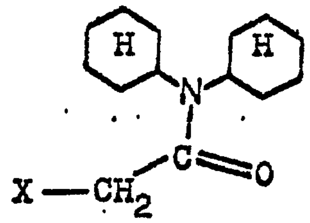

VIII

où X représente un groupe séparable ou que le diol de la formule VII est éthérifié par un ester de la formule IX

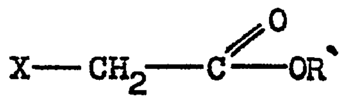

IX

où X représente un groupe séparable et

R' un radical aliphatique, cycloaliphatique, aromatique ou hétérocyclique, avec formation d'un diester d'acide dicarboxylique répondant à la formule X

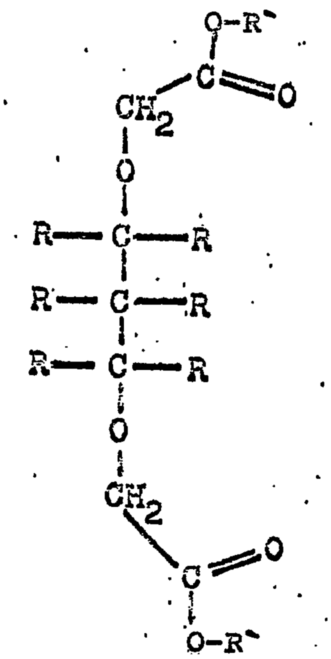

X

et cet ester est transformé en diamide d'acide dicarboxylique de la formule I, soit directement soit après saponification et transformation en un dérivé actif d'acide dicarboxylique par réaction avec la dicyclohexylamine de la formule XI

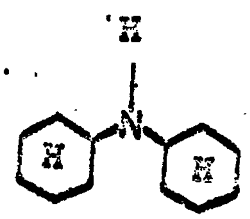

XI

2. Procédé selon la revendication 1, caractérisé en ce que l'on prépare les diamides d'acides dicarboxyliques dans lesquels les radicaux R repésentent, indépendamment les uns des autres, des atomes d'hydrogène ou des radicaux alkyliques à chaîne droite ou ramifiée, avec 1–15 atomes de carbone et, de préférence, des radicaux alkyliques à chaîne droite ou ramifiée avec 1–8 atomes de carbone.

3. Procédé selon la revendication 1 ou 2, caractérisé en ce que l'on prépare des diamides d'acides dicarboxyliques dans lesquels au moins deux des radicaux R et, de préférence, 3 à 6 des radicaux R représentent des atomes d'hydrogène.

4. Procédé selon la revendication 3, caractérisé en ce que l'on prépare des diamides d'acides dicarboxyliques qui présentent les formules suivantes II à VI.

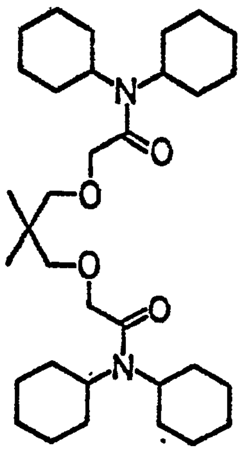

II

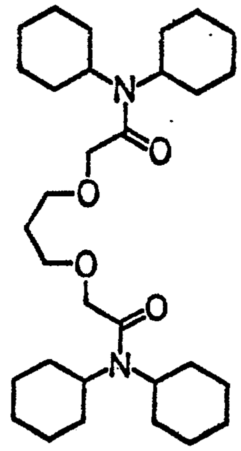

III

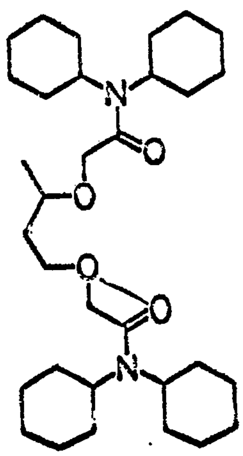

IV

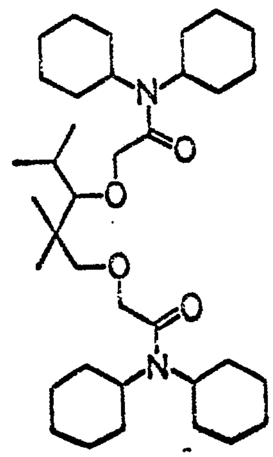

V

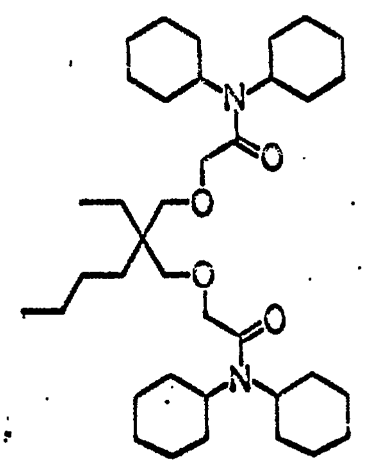

VI

5. Procédé de production de complexes de lithium des diamides d'acides dicarboxyliques de la formule I, caractérisé en ce que les composés de la formule I sont mis en contact avec des ions lithium avec formation de complexes 1:1 constitués d'un ion lithium avec une molécule de l'agent complexant.

6. Procédé selon la revendication 5, caractérisé en ce que l'on prépare les complexes de lithium 1:1 des diamides d'acides dicarboxyliques préparés par le procédé décrit aux revendications 2 à 4.

7. Membrane sélective pour les ions pour déterminer la concentration des ions lithium, caractérisée en ce qu'elle contient comme composant sélectif pour les ions, un diamide d'acide dicarboxylique de la formule I, selon la revendication 1.

8. Membrane sélective pour les ions selon la revendication 7, caractérisée en ce qu'elle contient comme composant sélectif pour les ions un diamide d'acide dicarboxylique selon l'une des revendications 2 à 4.

9. Membrane sélective pour les ions selon la revendication 7 ou 8, caractérisé en ce qu'elle contient en outre du chlorure de polyvinyle comme matrice pour le composant sélectif pour les ions.

10. Membrane sélective pour les ions selon la revendication 9, caractérisée en ce qu'elle contient du chlorure de polyvinyle comme matrice et un plastifiant et, de préférence, un plastifiant lipophile, par exemple un ester plastifiant tel que l'adipate de bis-(1-butyl-pentyle).

11. Dispositif d'essai pour déterminer les ions lithium dans les milieux liquides, caractérisé en ce qu'il contient comme composant un diamide d'acide dicarboxylique de la formule I, préparé selon la revendication 1.

12. Dispositif d'essai selon la revendication 11, caractérisé en ce qu'il contient comme composant un diamide d'acide dicarboxylique selon l'une des revendications 2 à 4.

13. Dispositif d'essai selon la revendication 11 ou 12, caractérisé en ce qu'il contient en outre une matrice de polymère et, de préférence également, un indicateur qui indique une modification de la valeur du pH et, par exemple, une modification de la valeur du pH par un virage de couleur.